# EUROPEAN PATENT SPECIFICATION

(11) **EP 3 968 676 B1**
(45) Date of publication and mention of the grant of the patent: **20.05.2026**
(21) Application number: 20802921.5
(22) Date of filing: 07.05.2020
(51) Int. Cl.: H04W 8/18, H04W 40/24, H04W 8/12, H04W 8/20, H04W 8/24, H04W 48/18, H04W 60/04, H04W 84/10

(54) **INFORMATION CONFIGURATION METHOD AND DEVICE**
INFORMATIONSKONFIGURATIONSVERFAHREN UND -VORRICHTUNG
PROCÉDÉ ET DISPOSITIF DE CONFIGURATION D'INFORMATIONS

(30) Priority: 07.05.2019 CN 201910377242
(43) Date of publication of application: 16.03.2022
(73) Proprietor: Huawei Technologies Co., Ltd., Longgang District Shenzhen, Guangdong 518129 (CN)
(72) Inventor: ZHU, Haoren, Shenzhen, Guangdong 518129 (CN); LI, Huan, Shenzhen, Guangdong 518129 (CN); JIN, Weisheng, Shenzhen, Guangdong 518129 (CN)
(74) Representative: Epping - Hermann - Fischer
(86) International application number: PCT/CN2020/089052
(87) International publication number: WO 2020/224622

(56) References cited:
- WO-A1-2019/031865
- CN-A- 109 120 528
- ANONYMOUS: "3rd Generation Partnership Project; Technical Specification Group Services and System Aspects; Study on enhancement of 5G System (5GS) for vertical and Local Area Network (LAN) services (Release 16)", 3GPP STANDARD; TECHNICAL REPORT; 3GPP TR 23.734, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.1.0, 25 March 2019 (2019-03-25), pages 1 - 111, XP051722871
- ANONYMOUS: "3rd Generation Partnership Project; Technical Specification Group Services and System Aspects; Procedures for the 5G System; Stage 2 (Release 16)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V16.0.2, 1 April 2019 (2019-04-01), pages 1 - 419, XP051723248
- ERICSSON; AT&T; SAMSUNG: "TS 23.502: Introducing Non-public Network", 3GPP DRAFT; S2-1902921, 1 March 2019 (2019-03-01), Santa Cruz - Tenerife, pages 1 - 33, XP051697458
- SAMSUNG: "NPN Subscription Data Provisioning", 3GPP DRAFT; S2-1903581, vol. SA WG2, 12 April 2019 (2019-04-12), Xi’an, China, pages 1 - 11, XP051719728
- OPPO: "23.501 - UAC and Access Categories for SNPN and CAG Capable UEs", 3GPP DRAFT; S2-1903488, vol. SA WG2, 12 April 2019 (2019-04-12), Xi’an (China), pages 1 - 4, XP051719640

## Description

### TECHNICAL FIELD

This application relates to the field of communication technologies, and in particular, to an information configuration method and an apparatus.

### BACKGROUND

Currently, a 5G standard conference defines three types of non-public networks (non-public networks, NPNs) (namely, private networks): (1) a standalone (standalone) NPN network, where this type of private network is completely independent of a public land mobile network (public land mobile network, PLMN), that is, the private network has an independent access network and an independent core network, (2) a closed access group (closed access group, CAG), where the CAG is a type of non-standalone (non-standalone) NPN network, and this type of private network is a part of a public network PLMN network and only serves a specific service/user; (3) a slicing (Slicing) network, where this type of private network is also a type of non-standalone NPN network, and by using a slicing feature defined in 5G, this type of private network uses a dedicated slice to serve a specific service/user.

Currently, a new requirement for the NPN network is proposed in 3GPP requirements, that is, a user in the public network PLMN needs to be allowed to temporarily access the NPN network. However, both a standalone NPN mode and a CAG mode in the foregoing NPN networks restrict an unauthorized terminal device from attempting to access a cell. Specifically, only an authorized terminal device or a subscribed terminal device can attempt to access the specific cell, and then can be further authorized by a core network. Therefore, to meet the requirement, configuration information in the public network and the private network needs to be updated. However, currently, no method is available.

The 3GPP Technical Specification TR 23.734 V16.1.0 with the title "Study on enhancement of 5G System (5GS) for vertical and Local Area Network (LAN) services" (Release 16) discloses a UE Registration procedure in a non-public network according to which a UE sends a registration request to a 5G-RAN device of a non-public NW, the 5G RAN device selects an AMF and sends a registration request to the AMF of the non-public NW and the AMF selects a UDM of the non-public NW or a UDM of a public NW to retrieve UE subscription data for the non-public network. The AMF registers with the selected UDM and retrieves the Access and Mobility Subscription data, SMF Selection Subscription data and UE context in SMF data using Nudm_SDM_Get.

The 3GPP Technical Specification TS 23.502 V16.0.2 with the title "Procedures for the 5G System" (Release 16) discloses that a new AMF to UE registration accept message in a registration procedure comprises 5G-GUTI, Registration Area, Mobility restrictions, PDU Session status, Allowed NSSAI, [Mapping Of Allowed NSSAI], [Configured NSSAI for the Serving PLMN], [Mapping Of Configured NSSAI], [rejected S-NSSAIs], Periodic Registration Update timer, [Active Time], [Strictly Periodic Registration Timer Indication], LADN Information and accepted MICO mode, IMS Voice over PS session supported Indication, Emergency Service Support indicator, Accepted DRX parameters, [extended idle mode DRX parameters], [Paging Time Window], Network support of Interworking without N26, Access Stratum Connection Establishment NSSAI Inclusion Mode, Network Slicing Subscription Change Indication, Operator-defined access category definitions, [List of equivalent PLMNs], Enhanced Coverage Restricted information, [Supported Network Behaviour], [Service Gap Time]. The Allowed NSSAI for the Access Type for the UE is included in the N2 message carrying the Registration Accept message.

### SUMMARY

This application provides an information configuration method and an apparatus, to update private network configuration information through a public network. The invention is set out by the appended claims. In the following, parts of the description and drawings referring to embodiments which are not covered by the claims are not presented as embodiments of the invention, but as examples useful for understanding the invention.

According to a first aspect, this application provides an information configuration method as an example for a better understanding. The method includes: After determining an operation mode of a terminal device based on first private network information of the terminal device, a unified data management network element sends first updated network configuration information to the terminal device, where the first updated network configuration information includes the operation mode and subscription information of the terminal device.

According to the foregoing method, subscription information of the terminal device may be updated through the unified data management network element, so that private network configuration information can be updated through a public network.

In a possible design, before the unified data management network element determines the operation mode of the terminal device based on the first private network information of the terminal device, the unified data management network element obtains the first private network information from a private network server.

According to the foregoing method, the unified data management network element may subsequently determine the operation mode of the terminal device based on the first private network information.

In a possible design, when a private network type is a CAG, the unified data management network element obtains an updated CAG identifier list based on the first private network information, and sends the updated CAG identifier list to an access and mobility management network element. In this way, the access and mobility management network element may perform access verification based on the CAG identifier list.

In a possible design, after the unified data management network element sends the first updated network configuration information to the terminal device, the unified data management network element sends the operation mode of the terminal device to a policy control network element.

According to the foregoing method, the policy control network element may subsequently determine policy information of the terminal device based on the operation mode.

In a possible design, the first private network information includes at least one of the following: a private network service type and the subscription information that is of the terminal device. In this way, the unified data management network element may accurately determine the operation mode of the terminal device based on the first private network information.

In a possible design, the operation mode is a mode in which the terminal device accesses a private network, a mode in which the terminal device accesses a public network, or a mode in which the terminal device accesses both a private network and a public network.

According to a second aspect, this application provides an information configuration method as an example for a better understanding. The method includes: A policy control network element obtains second private network information from a private network server, where the second private network information includes first policy information. After receiving an operation mode of a terminal device from a unified data management network element, the policy control network element determines second policy information based on the first policy information and the operation mode. The policy control network element sends second updated network configuration information to the terminal device, where the second updated network configuration information includes the second policy information, and the second policy information is related to the operation mode.

According to the foregoing method, policy information of the terminal device may be updated through the policy control network element, so that private network configuration information can be updated through a public network.

In a possible design, the second updated network configuration information further includes at least one of the following: a private network service type and the operation mode that is of the terminal device.

In a possible design, the first policy information includes a network selection policy and a routing policy.

According to a third aspect, this application provides an information configuration method according to independent claim 7. The method includes: After obtaining updated network configuration information, a terminal device accesses a private network based on the updated network configuration information, and routes application traffic based on the updated network configuration information.

According to the foregoing method, the terminal device may perform a subsequent operation based on the updated network configuration information.

In a possible design, a specific method in which the terminal device obtains the updated network configuration information may be: The terminal device receives first updated network configuration information from a unified data management network element, where the first updated network configuration information includes an operation mode of the terminal device and subscription information of the terminal device.

According to the foregoing method, the terminal device may perform a subsequent operation based on the first updated network configuration information.

In a possible design, a specific method in which the terminal device obtains the updated network configuration information may be: The terminal device receives second updated network configuration information from a policy control network element, where the second updated network configuration information includes second policy information, and the second policy information is related to an operation mode of the terminal device.

According to the foregoing method, the terminal device may perform a subsequent operation based on the second updated network configuration information.

In a possible design, before obtaining the updated network configuration information, the terminal device sends a private network service request to a private network server by using a private network application. In this way, the terminal device may actively push private network configuration information, so that a subsequent configuration update procedure can be performed.

According to a fourth aspect, this application provides an information configuration method according to independent claim 1. The method includes: After determining an operation mode of a terminal device based on third private network information of the terminal device, an access and mobility management network element sends the operation mode to a unified data management network element. The access and mobility management network element receives third updated network configuration information from the unified data management network element, where the third updated network configuration information includes the operation mode and subscription information. The access and mobility management network element sends the third updated network configuration information to the terminal device.

According to the foregoing method, subscription information of the terminal device may be updated through the access and mobility management network element, so that private network configuration information can be updated through a public network.

In a possible design, before the access and mobility management network element determines the operation mode of the terminal device based on the third private network information of the terminal device, the access and mobility management network element determines that the terminal device meets a configuration update condition, where the configuration update condition includes a triggering condition for triggering area information and/or time period information by the terminal device.

According to the foregoing method, when the terminal device meets the configuration update condition, the access and mobility management network element may perform an operation of determining the operation mode, so that a subsequent configuration update procedure can be performed.

In a possible design, before determining that the terminal device meets the configuration update condition, the access and mobility management network element receives first event subscription information from the unified data management network element, where the event subscription information includes the third private network information and a triggering condition for updating subscription information of the terminal device.

According to the foregoing method, the access and mobility management network element may accurately determine an occasion at which the subscription information of the terminal device needs to be updated.

In a possible design, before determining that the terminal device meets the configuration update condition, the access and mobility management network element receives second event subscription information from a policy control network element, where the second event subscription information includes a triggering condition for updating policy information of the terminal device.

According to the foregoing method, the access and mobility management network element may accurately determine an occasion at which the policy information of the terminal device needs to be updated.

In a possible design, before determining the operation mode of the terminal device based on the third private network information of the terminal device, the access and mobility management network element receives a configuration update request from the terminal device, where the configuration update request includes an identifier of a private network; and the access and mobility management network element queries the unified data management network element for the subscription information of the terminal device based on the identifier of the private network, and determines that the terminal device can access the private network.

According to the foregoing method, the terminal device may trigger a configuration update procedure.

In a possible design, the access and mobility management network element sends the operation mode of the terminal device to the policy control network element.

According to the foregoing method, the policy control network element may subsequently determine policy information of the terminal device based on the operation mode.

In a possible design, when a private network type is a CAG, the access and mobility management network element receives an updated CAG identifier list from the unified data management network element. In this way, the access and mobility management network element may perform access verification based on the CAG identifier list.

In a possible design, the third private network information further includes a private network service type. According to the foregoing method, the access and mobility management network element may subsequently determine the operation mode of the terminal device based on the third private network information.

In a possible design, the operation mode is a mode in which the terminal device accesses a private network, a mode in which the terminal device accesses a public network, or a mode in which the terminal device accesses both a private network and a public network.

According to a fifth aspect, this application provides an information configuration method as an example for a better understanding. The method includes: After receiving an operation mode of a terminal device from an access and mobility management network element, a unified data management network element sends third updated network configuration information to the access and mobility management network element, where the third updated network configuration information includes the operation mode and subscription information.

According to the foregoing method, subscription information of the terminal device may be subsequently updated through the access and mobility management network element, so that private network configuration information can be updated through a public network.

In a possible design, before receiving the operation mode of the terminal device from the access and mobility management network element, the unified data management network element obtains fourth private network information from a private network server.

In a possible design, after obtaining the fourth private network information from the private network server, the unified data management network element sends first event subscription information to the access and mobility management network element, where the first event subscription information includes third private network information and a triggering condition for updating subscription information of the terminal device.

According to the foregoing method, the access and mobility management network element may accurately determine an occasion at which the subscription information of the terminal device needs to be updated.

In a possible design, the fourth private network information includes the subscription information of the terminal device and the triggering condition for updating the subscription information of the terminal device.

In a possible design, the fourth private network information includes the subscription information of the terminal device.

In a possible design, when a private network type is a CAG, the unified data management network element obtains an updated CAG identifier list based on the fourth private network information; and the unified data management network element sends the updated CAG identifier list to the access and mobility management network element.

In this way, the access and mobility management network element may perform access verification based on the CAG identifier list.

According to a sixth aspect, this application provides an information configuration method as an example for a better understanding. The method includes: A policy control network element obtains fifth private network information from a private network server, where the fifth private network information includes third policy information. After receiving an operation mode of a terminal device from an access and mobility management network element, the policy control network element determines fourth policy information based on the third policy information and the operation mode. The policy control network element sends fourth updated network configuration information to the terminal device, where the fourth updated network configuration information includes the fourth policy information, and the fourth policy information is related to the operation mode.

According to the foregoing method, policy information of the terminal device may be updated through the policy control network element, so that private network configuration information can be updated through a public network.

In a possible design, the fourth updated network configuration information further includes at least one of the following: a private network service type and the operation mode that is of the terminal device.

In a possible design, the third policy information includes a private network selection policy and a routing policy.

In a possible design, the fifth private network information further includes a triggering condition for updating policy information of the terminal device.

In a possible design, before receiving the operation mode of the terminal device from the access and mobility management network element, the policy control network element sends second event subscription information to the access and mobility management network element, where the second event subscription information includes the triggering condition for updating the policy information of the terminal device.

According to the foregoing method, the access and mobility management network element may accurately determine an occasion at which the policy information of the terminal device needs to be updated.

According to a seventh aspect, this application provides an information configuration method according to independent claim 7. The method includes: After obtaining updated network configuration information, a terminal device accesses a private network based on the updated network configuration information, and routes application traffic based on the updated network configuration information.

According to the foregoing method, the terminal device may perform a subsequent operation based on the updated network configuration information.

In a possible design, a specific method in which the terminal device obtains the updated network configuration information may be: The terminal device receives third updated network configuration information from an access and mobility management network element, where the third updated network configuration information includes an operation mode of the terminal device and subscription information of the terminal device.

According to the foregoing method, the terminal device may perform a subsequent operation based on the third updated network configuration information.

In a possible design, a specific method in which the terminal device obtains the updated network configuration information may be: The terminal device receives fourth updated network configuration information from a policy control network element, where the fourth updated network configuration information includes fourth policy information, and the fourth policy information is related to an operation mode of the terminal device.

According to the foregoing method, the terminal device may perform a subsequent operation based on the fourth updated network configuration information.

In a possible design, before obtaining the updated network configuration information, the terminal device sends a configuration update request to the access and mobility management network element, where the configuration update request includes an identifier of the private network.

According to the foregoing method, the terminal device may trigger a configuration update procedure.

According to an eighth aspect, this application further provides a unified data management network element as an example for a better understanding. The unified data management network element has a function of implementing behavior of the unified data management network element in the method example according to the first aspect. The function may be implemented by hardware, or may be implemented by hardware executing corresponding software. The hardware or the software includes one or more modules corresponding to the foregoing function.

In a possible design, a structure of the unified data management network element includes a processing unit and a sending unit, and optionally further includes a receiving unit. These units may perform corresponding functions in the method example according to the first aspect. For details, refer to the detailed descriptions in the method example. Details are not described herein again.

In a possible design, a structure of the unified data management network element includes a transceiver and a processor, and optionally further includes a memory. The transceiver is configured to send and receive data, and is configured to communicate and interact with another device in a communication system. The processor is configured to support the unified data management network element in performing a corresponding function in the method according to the first aspect. The memory is coupled to the processor and stores program instructions and data that are necessary for the unified data management network element.

According to a ninth aspect, this application further provides a policy control network element as an example for a better understanding. The policy control network element has a function of implementing behavior of the policy control network element in the method example according to the second aspect. The function may be implemented by hardware, or may be implemented by hardware executing corresponding software. The hardware or the software includes one or more modules corresponding to the foregoing function.

In a possible design, a structure of the policy control network element includes a receiving unit, a processing unit, and a sending unit. These units may perform corresponding functions in the method example according to the second aspect. For details, refer to the detailed descriptions in the method example. Details are not described herein again.

In a possible design, a structure of the policy control network element includes a transceiver and a processor, and optionally further includes a memory. The transceiver is configured to send and receive data, and is configured to communicate and interact with another device in a communication system. The processor is configured to support the policy control network element in performing a corresponding function in the method according to the second aspect. The memory is coupled to the processor and stores program instructions and data that are necessary for the policy control network element.

According to a tenth aspect, this application further provides a terminal device according to independent claim 12. The terminal device has a function of implementing behavior of the terminal device in the method example according to the third aspect. The function may be implemented by hardware, or may be implemented by hardware executing corresponding software. The hardware or the software includes one or more modules corresponding to the foregoing function.

In a possible design, a structure of the terminal device includes a receiving unit and a processing unit, and optionally further includes a sending unit. These units may perform corresponding functions in the method example according to the third aspect. For details, refer to the detailed descriptions in the method example. Details are not described herein again.

In a possible design, a structure of the terminal device includes a transceiver and a processor, and optionally further includes a memory. The transceiver is configured to send and receive data, and is configured to communicate and interact with another device in a communication system. The processor is configured to support the terminal device in performing a corresponding function in the method according to the third aspect. The memory is coupled to the processor, and stores program instructions and data that are necessary for the terminal device.

According to an eleventh aspect, this application further provides an access and mobility management network element according to independent claim 11. The access and mobility management network element has a function of implementing behavior of the access and mobility management network element in the method example according to the fourth aspect. The function may be implemented by hardware, or may be implemented by hardware executing corresponding software. The hardware or the software includes one or more modules corresponding to the foregoing function.

In a possible design, a structure of the access and mobility management network element includes a processing unit, a sending unit, and a receiving unit. These units may perform corresponding functions in the method example according to the fourth aspect. For details, refer to the detailed descriptions in the method example. Details are not described herein again.

In a possible design, a structure of the access and mobility management network element includes a transceiver and a processor, and optionally further includes a memory. The transceiver is configured to send and receive data, and is configured to communicate and interact with another device in a communication system. The processor is configured to support the access and mobility management network element in performing a corresponding function in the method according to the fourth aspect. The memory is coupled to the processor and stores program instructions and data that are necessary for the access and mobility management network element.

According to a twelfth aspect, this application further provides a unified data management network element as an example for a better understanding. The unified data management network element has a function of implementing behavior of the unified data management network element in the method example according to the fifth aspect. The function may be implemented by hardware, or may be implemented by hardware executing corresponding software. The hardware or the software includes one or more modules corresponding to the foregoing function.

In a possible design, a structure of the unified data management network element includes a receiving unit and a sending unit, and optionally further includes a processing unit. These units may perform corresponding functions in the method example according to the fifth aspect. For details, refer to the detailed descriptions in the method example. Details are not described herein again.

In a possible design, a structure of the unified data management network element includes a transceiver and a processor, and optionally further includes a memory. The transceiver is configured to send and receive data, and is configured to communicate and interact with another device in a communication system. The processor is configured to support the unified data management network element in performing a corresponding function in the method according to the fifth aspect. The memory is coupled to the processor and stores program instructions and data that are necessary for the unified data management network element.

According to a thirteenth aspect, this application further provides a policy control network element as an example for a better understanding. The policy control network element has a function of implementing behavior of the policy control network element in the method example according to the sixth aspect. The function may be implemented by hardware, or may be implemented by hardware executing corresponding software. The hardware or the software includes one or more modules corresponding to the foregoing function.

In a possible design, a structure of the policy control network element includes a receiving unit, a processing unit, and a sending unit. These units may perform corresponding functions in the method example according to the sixth aspect. For details, refer to the detailed descriptions in the method example. Details are not described herein again.

In a possible design, a structure of the policy control network element includes a transceiver and a processor, and optionally further includes a memory. The transceiver is configured to send and receive data, and is configured to communicate and interact with another device in a communication system. The processor is configured to support the policy control network element in performing a corresponding function in the method according to the sixth aspect. The memory is coupled to the processor and stores program instructions and data that are necessary for the policy control network element.

According to a fourteenth aspect, this application further provides a terminal device according to independent claim 12. The terminal device has a function of implementing behavior of the terminal device in the method example according to the seventh aspect. The function may be implemented by hardware, or may be implemented by hardware executing corresponding software. The hardware or the software includes one or more modules corresponding to the foregoing function.

In a possible design, a structure of the terminal device includes a receiving unit and a processing unit, and optionally further includes a sending unit. These units may perform corresponding functions in the method example according to the seventh aspect. For details, refer to the detailed descriptions in the method example. Details are not described herein again.

In a possible design, a structure of the terminal device includes a transceiver and a processor, and optionally further includes a memory. The transceiver is configured to send and receive data, and is configured to communicate and interact with another device in a communication system. The processor is configured to support the terminal device in performing a corresponding function in the method according to the seventh aspect. The memory is coupled to the processor and stores program instructions and data that are necessary for the terminal device.

According to a fifteenth aspect, this application further provides a system as an example for a better understanding. The system includes a unified data management network element. The unified data management network element may be configured to perform the steps performed by the unified data management network element in the first aspect and any method of the first aspect or in the fifth aspect and any method of the fifth aspect. In a possible design, the system may further include a policy control network element. The policy control network element may be configured to perform the steps performed by the policy control network element in the first aspect and any method of the first aspect or in the fifth aspect and any method of the fifth aspect. In a possible design, the system may further include a terminal device. The terminal device may be configured to perform the steps performed by the terminal device in the first aspect and any method of the first aspect or in the fifth aspect and any method of the fifth aspect. In a possible design, the system may further include another device, for example, an access and mobility management network element, that interacts with at least one of the unified data management network element, the policy control network element, or the terminal device in the solutions provided in the embodiments of this application.

According to a sixteenth aspect, this application further provides a system as an example for a better understanding. The system includes a policy control network element. The policy control network element may be configured to perform the steps performed by the policy control network element in the second aspect and any method of the second aspect or in the sixth aspect and any method of the sixth aspect. In a possible design, the system may further include a unified data management network element. The unified data management network element may be configured to perform the steps performed by the unified data management network element in the second aspect and any method of the second aspect or in the sixth aspect and any method of the sixth aspect. In a possible design, the system may further include a terminal device. The terminal device may be configured to perform the steps performed by the terminal device in the second aspect and any method of the second aspect or in the sixth aspect and any method of the sixth aspect. In a possible design, the system may further include another device, for example, an access and mobility management network element, that interacts with at least one of the unified data management network element, the policy control network element, or the terminal device in the solutions provided in the embodiments of this application.

According to a seventeenth aspect, this application further provides a system as an example for a better understanding. The system includes a terminal device. The terminal device may be configured to perform the steps performed by the terminal device in the third aspect and any method of the third aspect or in the seventh aspect and any method of the seventh aspect. In a possible design, the system may further include a unified data management network element. The unified data management network element may be configured to perform the steps performed by the unified data management network element in the third aspect and any method of the third aspect or in the seventh aspect and any method of the seventh aspect. In a possible design, the system may further include a policy control network element. The policy control network element may be configured to perform the steps performed by the terminal device in the third aspect and any method of the third aspect or in the seventh aspect and any method of the seventh aspect. In a possible design, the system may further include another device, for example, an access and mobility management network element, that interacts with at least one of the unified data management network element, the policy control network element, or the terminal device in the solutions provided in the embodiments of this application.

According to an eighteenth aspect, this application further provides a system as an example for a better understanding. The system includes an access and mobility management network element. The access and mobility management network element may be configured to perform the steps performed by the access and mobility management network element in the fourth aspect and any method of the fourth aspect. In a possible design, the system may further include a terminal device. The terminal device may be configured to perform the steps performed by the terminal device in the fourth aspect and any method of the fourth aspect. In a possible design, the system may further include a unified data management network element. The unified data management network element may be configured to perform the steps performed by the unified data management network element in the fourth aspect and any method of the fourth aspect. In a possible design, the system may further include a policy control network element. The policy control network element may be configured to perform the steps performed by the terminal device in the fourth aspect and any method of the fourth aspect. In a possible design, the system may further include another device that interacts with at least one of the access and mobility management network element, the unified data management network element, the policy control network element, or the terminal device in the solutions provided in the embodiments of this application.

According to a nineteenth aspect, this application further provides an information configuration method as an example for a better understanding. The method includes: After obtaining ninth private network information from a private network server, a unified data management network element sends seventh updated network configuration information to an access and mobility management network element based on the ninth private network information, where the seventh updated network configuration information includes an information container.

According to the foregoing method, private network configuration information can be flexibly updated through a public network.

In a possible design, the ninth private network information includes the information container. In this way, an information container of a terminal device can be subsequently updated.

In a possible design, the ninth private network information further includes at least one of the following: a triggering condition for updating an information container of a terminal device, an update type, and a private network type.

In a possible design, when the ninth private network information includes the triggering condition for updating the information container of the terminal device and the update type is on-demand update, after obtaining the ninth private network information from the private network server, the unified data management network element sends third event subscription information to the access and mobility management network element, where the third event subscription information includes the triggering condition for updating the information container of the terminal device.

According to the foregoing method, the access and mobility management network element may accurately determine an occasion at which the information container of the terminal device needs to be updated.

In a possible design, the private network type is an SNPN, and the information container includes subscription information and/or credential information that are/is used for primary authentication or authorization; or the private network type is a PNI-NPN, the information container includes a configuration parameter of the terminal device and/or credential information used for external entity authentication, and the configuration parameter of the terminal device includes a CAG identifier list and PDU session information. In this way, the information container of the terminal device can be accurately updated based on different private network types.

In a possible design, when the private network type is the SNPN, a specific method in which the unified data management network element sends the seventh updated network configuration information to the access and mobility management network element may be: The unified data management network element sends the seventh updated network configuration information to the access and mobility management network element in a transparent transmission manner, so that the access and mobility management network element transparently transmits the seventh updated network configuration information to the terminal device.

In a possible design, when the private network type is the PNI-NPN, the unified data management network element updates subscription information and/or configuration information of the terminal device based on the information container, where the information container in the seventh updated network configuration information includes the updated subscription information and/or updated configuration information. In this way, the subscription information and/or the configuration information of the terminal device can be successfully updated.

According to a twentieth aspect, this application further provides an information configuration method as an example for a better understanding. The method may include: An access and mobility management network element receives seventh updated network configuration information from a unified data management network element, where the seventh updated network configuration information includes an information container. The access and mobility management network element sends the seventh updated network configuration information to a terminal device. According to the foregoing method, private network configuration information can be flexibly updated through a public network.

In a possible design, before sending the seventh updated network configuration information to the terminal device, the access and mobility management network element determines that the terminal device meets a configuration update condition, where the configuration update condition includes a triggering condition for triggering area information and/or time period information by the terminal device.

According to the foregoing method, when the terminal device meets the configuration update condition, a subsequent configuration update procedure can be performed.

In a possible design, before determining that the terminal device meets the configuration update condition, the access and mobility management network element receives third event subscription information from the unified data management network element, where the third event subscription information includes a triggering condition for updating an information container of the terminal device.

According to the foregoing method, the access and mobility management network element may accurately determine an occasion at which the information container of the terminal device needs to be updated.

In a possible design, when a private network type is an SNPN, a specific method in which the access and mobility management network element receives the seventh updated network configuration information from the unified data management network element may include: The access and mobility management network element receives the seventh updated network configuration information that is sent by the unified data management network element in a transparent transmission manner. A specific method in which the access and mobility management network element sends the seventh updated network configuration information to the terminal device may include: The mobility management network element transparently transmits the seventh updated network configuration information to the terminal device.

In a possible design, when a private network type is a PNI-NPN, the information container in the seventh updated network configuration information includes updated subscription information and/or updated configuration information. In this way, subscription information and/or configuration information of the terminal device can be successfully updated.

According to a twenty-first aspect, this application further provides an information configuration method as an example for a better understanding. The method may include: A terminal device receives seventh updated network configuration information from an access and mobility management network element, where the seventh updated network configuration information includes an information container. The terminal device updates an information container of the terminal device based on the seventh updated network configuration information, and accesses a private network based on the seventh updated network configuration information.

According to the foregoing method, private network configuration information can be flexibly updated through a public network.

In a possible design, when a private network type is an SNPN, a specific method in which the terminal device receives the seventh updated network configuration information from the access and mobility management network element may be: The terminal device receives the seventh updated network configuration information that is sent by the access and mobility management network element in a transparent transmission manner.

In a possible design, when the private network type is the SNPN, the terminal device selects an SNPN private network and performs cell selection based on subscription information and/or credential information that are/is used for primary authentication or authorization and that are/is included in the information container, and the terminal device performs primary authorization in the SNPN private network. In this way, private network selection and cell selection can be accurately performed.

In a possible design, when a private network type is a PNI-NPN, the information container in the seventh updated network configuration information includes updated subscription information and/or updated configuration information. In this way, subscription information and/or configuration information of the terminal device can be successfully updated.

In a possible design, when the private network type is the PNI-NPN, the terminal device performs CAG cell selection or slice selection, and performs, when establishing a session, secondary authorization based on credential information that is in the management information container and that is used for external entity authentication.

According to a twenty-second aspect, this application further provides a unified data management network element as an example for a better understanding. The unified data management network element has a function of implementing behavior of the unified data management network element in the method example according to the nineteenth aspect. The function may be implemented by hardware, or may be implemented by hardware executing corresponding software. The hardware or the software includes one or more modules corresponding to the foregoing function.

In a possible design, a structure of the unified data management network element includes a receiving unit and a sending unit, and optionally further includes a processing unit. These units may perform corresponding functions in the method example according to the nineteenth aspect. For details, refer to the detailed descriptions in the method example. Details are not described herein again.

In a possible design, a structure of the unified data management network element includes a transceiver and a processor, and optionally further includes a memory. The transceiver is configured to send and receive data, and is configured to communicate and interact with another device in a communication system. The processor is configured to support the unified data management network element in performing a corresponding function in the method according to the nineteenth aspect. The memory is coupled to the processor and stores program instructions and data that are necessary for the unified data management network element.

According to a twenty-third aspect, this application further provides an access and mobility management network element as an example for a better understanding. The access and mobility management network element has a function of implementing behavior of the access and mobility management network element in the method example according to the twentieth aspect. The function may be implemented by hardware, or may be implemented by hardware executing corresponding software. The hardware or the software includes one or more modules corresponding to the foregoing function.

In a possible design, a structure of the access and mobility management network element includes a receiving unit and a sending unit, and optionally further includes a processing unit. These units may perform corresponding functions in the method example according to the twentieth aspect. For details, refer to the detailed descriptions in the method example. Details are not described herein again.

In a possible design, a structure of the access and mobility management network element includes a transceiver and a processor, and optionally further includes a memory. The transceiver is configured to send and receive data, and is configured to communicate and interact with another device in a communication system. The processor is configured to support the access and mobility management network element in performing a corresponding function in the method according to the twentieth aspect. The memory is coupled to the processor and stores program instructions and data that are necessary for the access and mobility management network element.

According to a twenty-fourth aspect, this application further provides a terminal device as an example for a better understanding. The terminal device has a function of implementing behavior of the terminal device in the method example according to the twenty-first aspect. The function may be implemented by hardware, or may be implemented by hardware executing corresponding software. The hardware or the software includes one or more modules corresponding to the foregoing function.

In a possible design, a structure of the terminal device includes a receiving unit and a processing unit. These units may perform corresponding functions in the method example according to the twenty-first aspect. For details, refer to the detailed descriptions in the method example. Details are not described herein again.

In a possible design, a structure of the terminal device includes a transceiver and a processor, and optionally further includes a memory. The transceiver is configured to send and receive data, and is configured to communicate and interact with another device in a communication system. The processor is configured to support the terminal device in performing a corresponding function in the method according to the twenty-first aspect. The memory is coupled to the processor and stores program instructions and data that are necessary for the terminal device.

According to a twenty-fifth aspect, this application further provides a system as an example for a better understanding. The system includes a unified data management network element. The unified data management network element may be configured to perform the steps performed by the unified data management network element in the nineteenth aspect and any method of the nineteenth aspect. In a possible design, the system may further include an access and mobility management network element. The access and mobility management network element may be configured to perform the steps performed by the access and mobility management network element in the twentieth aspect and any method of the twentieth aspect. In a possible design, the system may further include a terminal device. The terminal device may be configured to perform the steps performed by the terminal device in the twenty-first aspect and any method of the twenty-first aspect. In a possible design, the system may further include another device that interacts with at least one of the unified data management network element, the access and mobility management network element, or the terminal device in the solutions provided in the embodiments of this application.

According to a twenty-sixth aspect, this application further provides a system as an example for a better understanding. The system includes an access and mobility management network element. The access and mobility management network element may be configured to perform the steps performed by the access and mobility management network element in the twentieth aspect and any method of the twentieth aspect. In a possible design, the system may further include a terminal device. The terminal device may be configured to perform the steps performed by the terminal device in the twenty-first aspect and any method of the twenty-first aspect. In a possible design, the system may further include a unified data management network element. The unified data management network element may be configured to perform the steps performed by the unified data management network element in the nineteenth aspect and any method of the nineteenth aspect. In a possible design, the system may further include another device that interacts with at least one of the access and mobility management network element, the unified data management network element, or the terminal device in the solutions provided in the embodiments of this application.

According to a twenty-seventh aspect, this application further provides a system as an example for a better understanding. The system includes a terminal device. The terminal device may be configured to perform the steps performed by the terminal device in the twenty-first aspect and any method of the twenty-first aspect. In a possible design, the system may further include an access and mobility management network element. The access and mobility management network element may be configured to perform the steps performed by the access and mobility management network element in the twentieth aspect and any method of the twentieth aspect. In a possible design, the system may further include a unified data management network element. The unified data management network element may be configured to perform the steps performed by the unified data management network element in the nineteenth aspect and any method of the nineteenth aspect. In a possible design, the system may further include another device that interacts with at least one of the unified data management network element or the access and mobility management network element in the solutions provided in the embodiments of this application.

According to a twenty-eighth aspect, this application further provides a computer storage medium as an example for a better understanding. The computer storage medium stores computer-executable instructions. When the computer-executable instructions are invoked by a computer, the computer is enabled to perform any one of the foregoing methods.

According to a twenty-ninth aspect, this application further provides a computer program product including instructions as an example for a better understanding. When the computer program product runs on a computer, the computer is enabled to perform any one of the foregoing methods.

According to a thirtieth aspect, this application further provides a chip as an example for a better understanding. The chip is coupled to a memory, and is configured to read and execute program instructions stored in the memory, to implement any one of the foregoing methods.

### BRIEF DESCRIPTION OF DRAWINGS

FIG. 1 is a schematic diagram of a structure of a communication system according to this application;
FIG. 2 is a flowchart of an information configuration method according to an example for a better understanding;
FIG. 3 is a flowchart of another information configuration method according to this application;
FIG. 4A and FIG. 4B are a flowchart of an example of an information configuration method according to an example for a better understanding;
FIG. 5A and FIG. 5B are a flowchart of an example of another information configuration method according to an example for a better understanding;
FIG. 6A and FIG. 6B are a flowchart of an example of another information configuration method according to this application;
FIG. 7A and FIG. 7B are a flowchart of an example of another information configuration method according to this application;
FIG. 8A and FIG. 8B are a flowchart of an example of another information configuration method according to this application;
FIG. 9A and FIG. 9B are a flowchart of an example of another information configuration method according to this application;
FIG. 10 is a schematic diagram of a structure of an apparatus according to this application;
FIG. 11 is a schematic diagram of a structure of another apparatus according to this application;
FIG. 12 is a schematic diagram of a structure of another apparatus according to this application;
FIG. 13 is a schematic diagram of a structure of another apparatus according to this application;
FIG. 14 is a diagram of a structure of a unified data management network element according to this application;
FIG. 15 is a diagram of a structure of a policy control network element according to this application;
FIG. 16 is a diagram of a structure of an access and mobility management network element according to this application;
FIG. 17 is a diagram of a structure of a terminal device according to this application;
FIG. 18 is a flowchart of another information configuration method according to an example for a better understanding;
FIG. 19A and FIG. 19B are a flowchart of an example of another information configuration method according to an example for a better understanding;
FIG. 20 is a schematic diagram of a structure of another apparatus according to an example for a better understanding;
FIG. 21 is a schematic diagram of a structure of another apparatus according to an example for a better understanding; and
FIG. 22 is a schematic diagram of a structure of another apparatus according to an example for a better understanding.

### DETAILED DESCRIPTION OF EMBODIMENTS

The following further describes this application in detail with reference to the accompanying drawings.

Embodiments of this application provide an information configuration method and an apparatus, to update private network configuration information through a public network. The method and the apparatus in this application are based on a same inventive concept. The method and the apparatus have similar problem resolving principles. Therefore, for implementation of the apparatus and the method, refer to each other. Details of repeated parts are not described.

The following describes some terms in this application, to facilitate understanding of a person skilled in the art.
(1) A public network may refer to a PLMN in this application.
(2) A private network may refer to an NPN in this application. The NPN includes three types of networks, which are specifically a standalone NPN network, a CAG, and a slicing network. The CAG and the slicing network belong to non-standalone NPN networks. The standalone NPN network restricts an unauthorized terminal device from attempting to access a cell. The CAG restricts an unauthorized terminal device from attempting to access a cell. Currently, the slicing network cannot restrict an unauthorized terminal device from accessing a cell. The embodiments of this application only relate to two types of private networks, that is, the standalone NPN network and the CAG that restrict an unauthorized terminal device from attempting to access a cell.
(3) In the descriptions of this application, terms such as "first" and "second" are merely used for distinction and description, and shall not be understood as an indication or implication of relative importance or an indication or implication of an order.

To describe technical solutions in the embodiments of this application more clearly, the following describes the information configuration method and the apparatus in the embodiments of this application in detail with reference to the accompanying drawings.

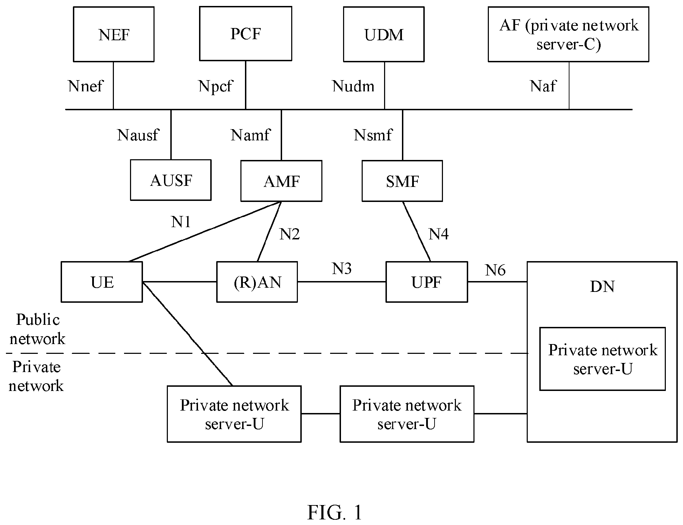

FIG. 1 shows an architecture of a possible communication system to which the information configuration method provided in the embodiments of this application is applicable. The architecture of the communication system includes two parts: a public network and a private network. The public network may include a network exposure function network element, a policy control function network element, a data management network element, an application function network element, an authentication server function network element, a core network access and mobility management function network element, a session management function network element, a terminal device, an access network device, and a user plane function network element. The private network may include a private network access network and a private network core network. A data network exists in both the public network and the private network. In a possible form, a private network server may include two parts: a control plane private network server and a user plane private network server. The control plane private network server may be deployed on a control plane of the public network, and is located in the application function network element. The user plane private network server may be deployed in the data network.

FIG. 1 shows a possible example of the architecture of the communication system. The architecture of the communication system specifically includes: a NEF network element, a PCF network element, a UDM network element, an AF network element, an AUSF network element, an AMF network element, an SMF network element, UE, an access network (access network, AN) device, a UPF network element, a data network (data network, DN), a private network server-C, a private network server-U, a private network access network, and a private network core network. The AMF network element may be connected to the UE through an N1 interface, the AMF may be connected to the AN device through an N2 interface, the AN device may be connected to the UPF through an N3 interface, the SMF may be connected to the UPF through an N4 interface, and the UPF may be connected to the DN through an N6 interface. An interface name is merely an example for description, and is not specifically limited in the embodiments of this application. It should be understood that the embodiments of this application are not limited to the communication system shown in FIG. 1. Names of the network elements shown in FIG. 1 are merely used as examples for description herein, and do not constitute limitations on the network elements included in the architecture of the communication system to which the method in this application is applicable. Functions of the network elements or the devices in the communication system are described in detail below.

The terminal device may also be referred to as user equipment (user equipment, UE), a mobile station (mobile station, MS), a mobile terminal (mobile terminal, MT), or the like, and is a device that provides a user with voice and/or data connectivity. The terminal device communicates with the access network device by using a specific air interface technology. Currently, the terminal device may be a handheld terminal, a mobile phone (mobile phone), a tablet computer, a notebook computer, a subscriber unit (subscriber unit), a cellular phone (cellular phone), a smart phone (smart phone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, or another device that can access a network. In FIG. 1, the terminal device shown by using UE is merely used as an example, and the terminal device is not limited.

A radio access network may be the access network (access network, AN) shown in FIG. 1, and provide a wireless access service to the terminal device. The access network device is a device, in the communication system, that connects the terminal device to a wireless network, and is mainly responsible for functions such as radio resource management, quality of service (quality of service, QoS) management, data compression, and encryption on an air interface side. The access network device is a node in the radio access network, and may also be referred to as a base station, or may also be referred to as a radio access network (radio access network, RAN) node (or device). Currently, some examples of the access network device are: a macro base station, a micro base station (or referred to as a small cell), a relay node, an access point, a gNB, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless fidelity (wireless fidelity, Wi-Fi) access point (access point, AP), and the like.

The data network, for example, the data network (data network, DN) shown in FIG. 1, may be the Internet (Internet), an IP multimedia service (IP Multi-media Service, IMS) network, a regional network (namely, a local network, for example, a mobile edge computing (mobile edge computing, MEC) network), or the like. The data network includes an application server, and the application server provides a service to the terminal device by performing data transmission with the terminal device.

The core network access and mobility management function network element is a core network element, and may be configured to manage access control and mobility of the terminal device. During actual application, the core network access and mobility management function network element includes a mobility management function in a mobility management entity (mobility management entity, MME) in a network framework in long term evolution (long term evolution, LTE), and includes an access management function. Specifically, the core network access and mobility management function network element may be responsible for registration of the terminal device, mobility management, a tracking area update procedure, reachability detection, selection of the session management function network element, mobility status transition management, and the like. For example, in 5G, the core network access and mobility management function network element may be an AMF (access and mobility management function) network element, for example, as shown in FIG. 1. In future communication such as 6G, the core network access and mobility management function network element may still be an AMF network element or have another name. This is not limited in this application. When the core network access and mobility management function network element is the AMF network element, the AMF may provide an Namf service.

The session management function network element may be configured to be responsible for session management (including session establishment, modification, and release) of the terminal device, selection and reselection of the user plane function network element, internet protocol (internet protocol, IP) address allocation of the terminal device, quality of service (quality of service, QoS) control, and the like. For example, in 5G, the session management function network element may be an SMF (session management function) network element, for example, as shown in FIG. 1. In future communication such as 6G, the session management function network element may still be an SMF network element or have another name. This is not limited in this application. When the session management function network element is the SMF network element, the SMF may provide an Nsmf service.

The authentication server function network element may be configured to provide an authentication service. For example, in 5G, the authentication server function network element may be an AUSF (authentication server function) network element, for example, as shown in FIG. 1. In future communication such as 6G, the authentication server function network element may still be an AUSF network element or have another name. This is not limited in this application. When the authentication server function network element is the AUSF network element, the AUSF network element may provide an Nausf service.

The policy control function network element may be configured to be responsible for policy control decision-making, providing functions such as detection, gating control, and QoS that are based on a service data flow and an application, and flow-based charging control, obtaining policy-related user subscription information, and the like. For example, in 5G, the policy control function network element may be a PCF (policy control function) network element, for example, as shown in FIG. 1. In future communication such as 6G, the policy control function network element may still be a PCF network element or have another name. This is not limited in this application. When the policy control function network element is the PCF network element, the PCF network element may provide an Npcf service.

A main function of the application function network element is to interact with a 3rd generation partnership project (3rd generation partnership project, 3GPP) core network to provide a service, to affect service flow routing, access network capability exposure, policy control, and the like. For example, in 5G, the application function network element may be an AF (application function) network element, for example, as shown in FIG. 1. In future communication such as 6G, the application function network element may still be an AF network element or have another name. This is not limited in this application. When the application function network element is the AF network element, the AF network element may provide an Naf service.

The data management network element may be configured to manage subscription data of the terminal device, registration information related to the terminal device, and the like. For example, in 5G, the data management network element may be a unified data management (unified data management, UDM) network element, for example, as shown in FIG. 1. In future communication such as 6G, the data management network element may still be a UDM network element or have another name. This is not limited in this application. When the data management network element is the UDM network element, the UDM network element may provide an Nudm service.

The network exposure function network element may be configured to enable the 3GPP network to securely provide a network service capability to an AF (for example, a services capability server (Services Capability Server, SCS) or an application server (Application Server, AS)) of a third party, and the like. For example, in 5G, the network exposure function network element may be a NEF (network exposure function) network element, for example, as shown in FIG. 1. In future communication such as 6G, the network exposure function network element may still be a NEF network element or have another name. This is not limited in this application. When the network exposure function network element is the NEF, the NEF may provide an Nnef service to another network function network element.

The user plane function network element may be configured to forward user plane data of the terminal device. Main functions include data packet routing and forwarding, mobility anchoring, supporting, by using an uplink classifier, routing of a service flow to the data network, supporting a multihoming packet data unit (Packet Data Unit, PDU) session by using a branching point, and the like. For example, in 5G, the user plane function network element may be a UPF (user plane function) network element, for example, as shown in FIG. 1. In future communication such as 6G, the user plane function network element may still be a UPF network element or have another name. This is not limited in this application.

The private network server may include the control plane private network server and the user plane private network server, for example, the private network server-C and the private network server-U shown in FIG. 1. The private network server-C represents a logical functional entity that can exchange signaling with a core network element, and the private network server-U represents a logical functional entity that provides a specific service for the terminal device. The private network server may update private network-related configuration information to the public network by using the private network server-C, and the private network server may provide a private network application service to the terminal device by using the private network server-U. The private network server-C may be located in the application function network element, and the private network server-U may be located in the data network. For example, as shown in FIG. 1, the private network server-C may be located in the AF network element, and the private network server-U may be located in the DN.

Each of the foregoing network elements may also be referred to as a functional entity, and may be a network element implemented on dedicated hardware, or may be a software instance run on dedicated hardware, or an instance of a virtualization function on a proper platform. For example, the virtualization platform may be a cloud platform.

It should be noted that the architecture of the communication system shown in FIG. 1 is not limited to including only the network elements shown in the figure, and may further include another device not shown in the figure. Details are not described herein in this application one by one.

It should be noted that a distribution form of the network elements in the core network is not limited in the embodiments of this application. The distribution form shown in FIG. 1 is merely an example, and is not limited in this application.

For ease of description, the network elements shown in FIG. 1 are used as examples for description subsequently in this application, and an XX network element is directly referred to as XX for short. It should be understood that names of all network elements in this application are merely used as examples, and the network elements may also be referred to as other names in future communication, or the network elements in this application may also be replaced with other entities or devices that have same functions in future communication. These are not limited in this application. A general description is provided herein, and details are not described subsequently.

It should be noted that the communication system shown in FIG. 1 does not constitute a limitation on a communication system to which the embodiments of this application are applicable. The architecture of the communication system shown in FIG. 1 is a 5G system architecture. Optionally, the method in the embodiments of this application is further applicable to various future communication systems, for example, a 6G or another communication network.

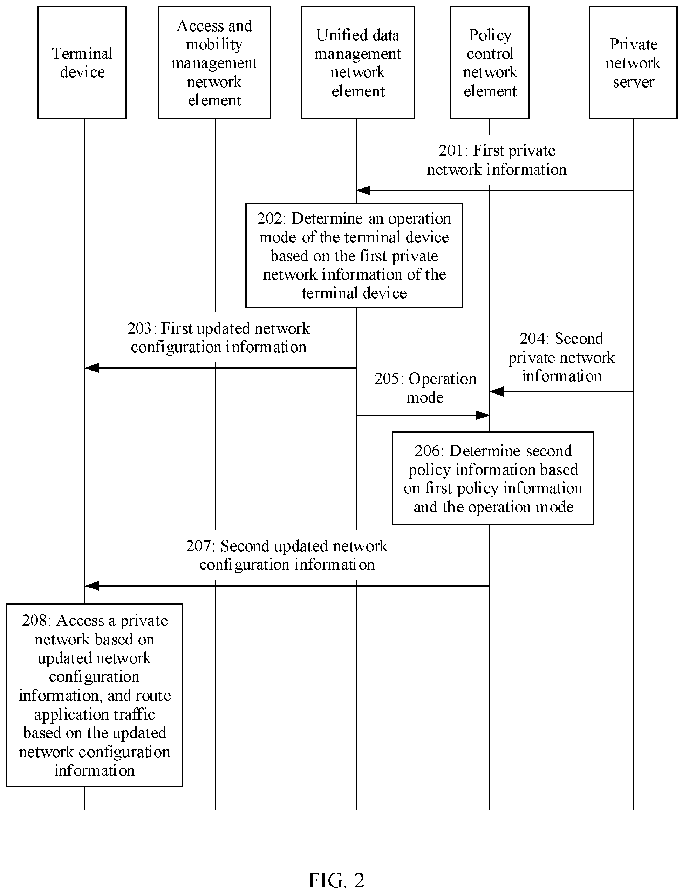

An information configuration method provided in an embodiment of this application is applicable to the communication system shown in FIG. 1. In this embodiment, a terminal device actively pushes private network configuration information. An implementation prerequisite is that a private network application is installed on the terminal device, and the terminal device may be connected to a private network server in a private network through a public network. With reference to FIG. 2, a specific procedure of the method includes the following steps.

Step 201: A unified data management network element obtains first private network information from the private network server.

The first private network information may include at least one of the following: a private network service type and subscription information that is of the terminal device.

Specifically, the private network service type may be a type of a specific service, for example, an audio service in a concert scenario.

For example, the subscription information of the terminal device may include a data network name (data network name, DNN) and a private network identifier list. The DNN is used to indicate a data domain that provides a private network service. When a private network type is a CAG, the private network identifier list is a CAG ID list (whitelist/blacklist), and the terminal device determines, by determining whether a CAG ID is in the whitelist, whether the terminal device can attempt to access a service provided by a CAG network. When a private network type is a standalone NPN, the private network identifier list is a standalone NPN ID list, and the terminal device may determine, based on a standalone NPN ID, whether to attempt to access a service provided by a standalone NPN network.

In an optional implementation, when the private network server is located in an operator management domain, the private network server may directly interact with a public network core network element. In this case, the unified data management network element may directly obtain the first private network information from the private network server.

In another optional implementation, the private network server cannot directly interact with a public network core network element. In this case, the unified data management network element needs to obtain the first private network information from the private network server through a network exposure function network element. Specifically, the private network server first sends, to the network exposure function network element, private network configuration information of the UE that needs to be updated, where the private network configuration information of the UE that needs to be updated includes the first private network information, then, the network exposure function network element sends the first private network information to the unified data management network element.

During specific implementation, before step 201, the terminal device sends a private network service request to the private network server by using the private network application.

Step 202: The unified data management network element determines an operation mode of the terminal device based on the first private network information of the terminal device.

In an optional implementation, the operation mode is a mode in which the terminal device accesses a private network, a mode in which the terminal device accesses a public network, or a mode in which the terminal device accesses both a private network and a public network. For example, the mode in which the terminal device accesses a private network may be a mode in which the terminal device accesses an NPN network, the mode in which the terminal device accesses a public network may be a mode in which the terminal device accesses a PLMN network, and the mode in which the terminal device accesses both a private network and a public network may be a mode in which the terminal device accesses both an NPN network and a PLMN network.

Specifically, the unified data management network element further needs to determine the operation mode of the terminal device with reference to a network capability of the terminal device. The network capability of the terminal device is a network capability supported by the terminal device, and may include supporting access to a private network (for example, supporting access to an NPN network), supporting access to a public network (for example, supporting access to a PLMN network), or supporting access to both a private network and a public network (for example, supporting access to both an NPN network and a PLMN network).

For example, that the unified data management network element determines the operation mode of the terminal device based on the network capability of the terminal device and the first private network information may be specifically that the unified data management network element determines the operation mode of the terminal device based on the network capability of the terminal device and information such as the private network service type. Specifically, when the network capability of the terminal device indicates that the terminal device does not support access to a private network, or a type of a service accessed by the terminal device is different from the private network service type, the unified data management network element determines that the operation mode is the mode in which the terminal device accesses a public network; when the network capability of the terminal device indicates that the terminal device supports access to a private network, and a type of a service accessed by the terminal device is the same as the private network service type, the unified data management network element determines, based on an operator policy, that the operation mode may be the mode in which the terminal device accesses a private network or the mode in which the terminal device accesses both a private network and a public network.

In an optional implementation, the DNN may also indicate the private network service type.

Step 203: The unified data management network element sends first updated network configuration information to the terminal device, where the first updated network configuration information includes the operation mode and the subscription information of the terminal device.

It should be noted that the operation mode may be included in the first updated network configuration information, as shown in step 203. Alternatively, the operation mode may be directly included in the subscription information of the terminal device. This is not limited in this application. Alternatively, the operation mode may be indicated based on the subscription information. For example, it indicates, based on an identifier of the private network in the subscription information, that the operation mode is the mode in which a private network is accessed.

In an optional implementation, when the private network type is the CAG, the unified data management network element obtains an updated CAG identifier list based on the first private network information, and sends the updated CAG identifier list to an access and mobility management network element. The access and mobility management network element may verify, based on the CAG identifier list (that is, a whitelist or a blacklist), whether the private network that the terminal device is to access belongs to the whitelist or the blacklist, and if it is determined that the private network is in the whitelist, the terminal device is allowed to access a core network; otherwise, the terminal device is refused to access the core network.

For example, when the subscription information in the first private network information includes the CAG identifier list, the unified data management network element may directly obtain the CAG identifier list from the subscription information.

Step 204: A policy control network element obtains second private network information from the private network server, where the second private network information includes first policy information.

Specifically, the first policy information may include a network selection policy and a routing policy. For example, the network selection policy may include the identifier of the private network (for example, an NPN ID) and an identifier of the public network (for example, a PLMN ID), and may further include information such as a network selection priority; the routing policy may indicate whether data traffic of the terminal device is transmitted through the private network or the public network, or whether the data traffic of the terminal device is transmitted through both the private network and the public network.

In an optional implementation, the second private network information may further include the private network service type and the like.

In an implementation, when the private network server is located in the operator management domain, the private network server may directly interact with the public network core network element. In this case, the policy control network element may directly obtain the second private network information from the private network server.

In another implementation, the private network server cannot directly interact with the public network core network element. In this case, the policy control network element needs to obtain the second private network information from the private network server through the network exposure function network element. Specifically, the private network server first sends, to the network exposure function network element, the private network configuration information of the UE that needs to be updated, where the private network configuration information of the UE that needs to be updated includes the second private network information, then, the network exposure function network element sends the second private network information to the policy control network element. It can be learned that in this case, the private network configuration information of the UE that needs to be updated includes both the first private network information and the second private network information.

Step 205: The policy control network element receives the operation mode of the terminal device from the unified data management network element.

Step 206: The policy control network element determines second policy information based on the first policy information and the operation mode.

During specific implementation, the policy control network element further needs to determine the second policy information with reference to the private network service type. Specifically, the policy control network element determines the second policy information based on the first policy information, the private network service type, and the operation mode. For example, when the operation mode is the mode in which the terminal device accesses both a private network and a public network, the policy control network element needs to generate a specific routing policy based on the private network service type and the operator policy, to determine a percentage of service traffic in each of the private network and the public network. In addition, the second policy information further includes a network selection policy determined based on the first policy information. For another example, when the operation mode is the mode in which the terminal device accesses a private network, the second policy information is the same as the first policy information.

For example, the second policy information may be the same as the first policy information. In this case, policy information of the private network does not affect policy information of the public network. Alternatively, the second policy information may be different from the first policy information. In this case, policy information of the private network affects policy information of the public network.

Step 207: The policy control network element sends second updated network configuration information to the terminal device, where the second updated network configuration information includes the second policy information, and the second policy information is related to the operation mode.

That the second policy information is related to the operation mode specifically means that specific content of the second policy information is related to the operation mode, that is, different operation modes correspond to different specific content of the second policy information.

Specifically, the second updated network configuration information further includes at least one of the following: the private network service type and the operation mode that is of the terminal device.

In an optional implementation, the operation mode of the terminal device may alternatively be included in the second policy information.

Step 208: The terminal device accesses the private network based on updated network configuration information, and routes application traffic based on the updated network configuration information.

In an optional implementation, the updated network configuration information may include the first updated network configuration information received by the terminal device from the unified data management network element. In this case, the private network type may be the standalone NPN.

In another optional implementation, the updated network configuration information may include the first updated network configuration information received by the terminal device from the unified data management network element, and the second updated network configuration information received by the terminal device from the policy control network element. In this case, the private network type may be the CAG or the standalone NPN.

In a case, when the private network type is the CAG, in step 208, the terminal device may determine, based on the operation mode (for example, allowed to access a CAG cell) and a CAG network selection policy (a CAG ID and priority information), whether to attempt to access a CAG network. In addition, the terminal device routes application traffic based on a routing policy (for example, a UE route selection policy (UE route selection policy, URSP)) (where for example, the data traffic is routed to the CAG network, or may be routed to both the CAG network and the public network).

In another case, when the private network type is the standalone NPN, in step 208, the terminal device may determine, based on the operation mode (for example, allowed to access a standalone NPN cell) and a standalone NPN network selection policy (a standalone NPN ID and priority information), whether to attempt to access a standalone NPN network. In addition, the terminal device routes application traffic based on a routing policy (for example, a URSP) (where for example, the data traffic is routed to the standalone NPN network, or may be routed to both the standalone NPN network and the public network).

For example, after a private network service ends, each network element or device needs to restore network configuration information used before update. Specifically, the following manners may be included.

In a manner, the terminal device may send a private network service disconnection request to the private network server by using the private network application, that is, request to disconnect a service; the private network server sends private network service disconnection requests to the unified data management network element, the policy control network element, and the access and mobility management network element, that is, requests to disconnect services; then each network element or device restores the network configuration information used before update.

In another manner, each of the terminal device, the unified data management network element, the policy control network element, and the access and mobility management network element is provided with a timer, and restores, after the timer expires, the network configuration information used before update.

It should be noted that in the standalone NPN, a possibility of affecting the public network (network selection) is relatively small. Therefore, step 205 to step 207 may be optional steps.

According to the information configuration method provided in this embodiment of this application, after determining the operation mode of the terminal device based on the first private network information of the terminal device, the unified data management network element sends the first updated network configuration information to the terminal device, and after determining the second policy information based on the first policy information and the operation mode, the policy control network element sends the second updated network configuration information to the terminal device, so that the terminal device accesses the private network based on the updated network configuration information, and routes the application traffic based on the updated network configuration information. According to the foregoing method, private network configuration information can be flexibly updated through the public network.

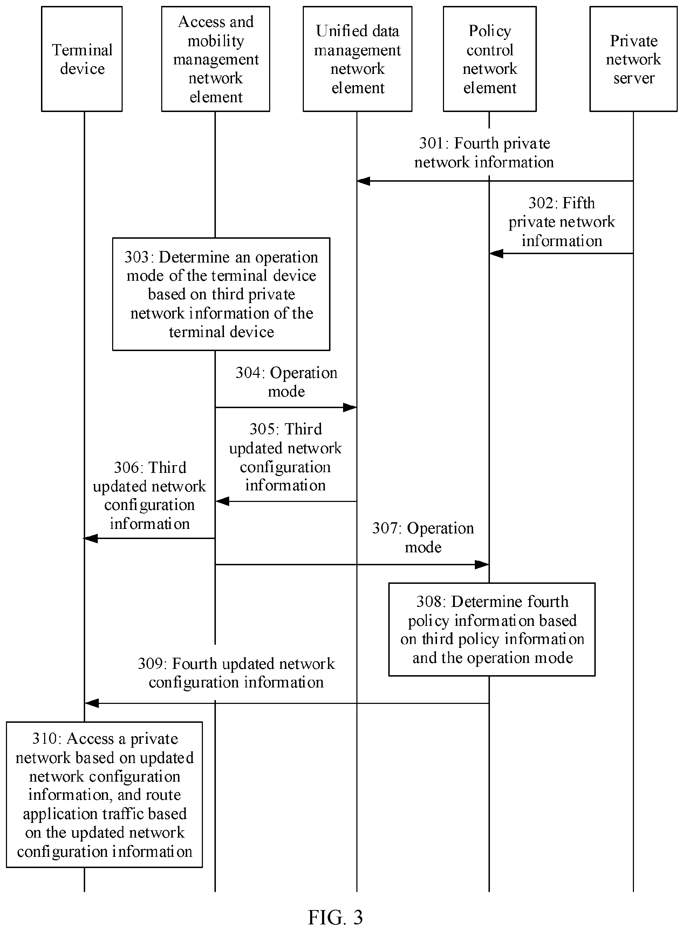

Another information configuration method provided in an embodiment of this application is applicable to the communication system shown in FIG. 1. In this embodiment, private network configuration information may be pushed at an area granularity. An implementation prerequisite is that a private network server sends the configuration information to a public network in advance, and subscribes to a configuration update event based on conditions such as an area and/or a time period. Alternatively, a terminal device actively requests private network configuration information. With reference to FIG. 3, a specific procedure of the method includes the following steps.

Step 301: A unified data management network element obtains fourth private network information from the private network server.

Specifically, content included in the fourth private network information varies based on different scenarios. For example, in a scenario in which the private network configuration information is pushed at the area granularity, the fourth private network information includes subscription information of the terminal device and a triggering condition for updating subscription information of the terminal device. For another example, in a scenario in which the terminal device actively requests the private network configuration information, the fourth private network information includes subscription information of the terminal device.

For example, the subscription information of the terminal device may include a data network name (data network name, DNN) and a private network identifier list. The DNN is used to indicate a data domain that provides a private network service. When a private network type is a CAG, the private network identifier list is a CAG ID list (whitelist/blacklist), and a CAG ID is used to indicate a CAG network that the terminal device can or cannot access. When a private network type is a standalone NPN, the private network identifier list is a standalone NPN ID list, and a standalone NPN ID is used to indicate a standalone NPN network that the UE can or cannot access.

In an optional implementation, when the private network server is located in an operator management domain, the private network server may directly interact with a public network core network element. In this case, the unified data management network element may directly obtain the fourth private network information from the private network server.

In another optional implementation, the private network server cannot directly interact with a public network core network element. In this case, the unified data management network element needs to obtain the fourth private network information from the private network server through a network exposure function network element. Specifically, the private network server first sends, to the network exposure function network element, private network configuration information of the UE that needs to be updated, where the private network configuration information of the UE that needs to be updated includes the fourth private network information; then, the network exposure function network element sends the fourth private network information to the unified data management network element.

For example, the fourth private network information may further include a private network service type.

Step 302: A policy control network element obtains fifth private network information from the private network server, where the fifth private network information includes third policy information.

Specifically, the third policy information may include a private network selection policy and a routing policy. For example, the network selection policy may include an identifier of a private network (for example, an NPN ID) and an identifier of the public network (for example, a PLMN ID), and may further include information such as a network selection priority; the routing policy may indicate whether data traffic of the terminal device is transmitted through the private network or the public network, or whether the data traffic of the terminal device is transmitted through both the private network and the public network.

In an optional implementation, the fifth private network information may further include the private network service type and the like.

In an implementation, when the private network server is located in the operator management domain, the private network server may directly interact with the public network core network element. In this case, the policy control network element may directly obtain the fifth private network information from the private network server.

In another implementation, the private network server cannot directly interact with the public network core network element. In this case, the policy control network element needs to obtain the fifth private network information from the private network server through the network exposure function network element. Specifically, the private network server first sends, to the network exposure function network element, the private network configuration information of the UE that needs to be updated, where the private network configuration information of the UE that needs to be updated includes the fifth private network information, then, the network exposure function network element sends the fifth private network information to the policy control network element. It can be learned that in this case, the private network configuration information of the UE that needs to be updated includes both the fourth private network information and the fifth private network information.

Step 303: An access and mobility management network element determines an operation mode of the terminal device based on third private network information of the terminal device.

In an optional implementation, the third private network information further includes the private network service type.

Specifically, the private network service type may be a type of a specific service, for example, an audio service in a concert scenario.

Specifically, for specific descriptions of the operation mode, refer to the descriptions of the operation mode in step 202 in the embodiment shown in FIG. 2. Details are not described herein again.

Specifically, the access and mobility management network element further needs to determine the operation mode of the terminal device with reference to a network capability of the terminal device. For example, that the access and mobility management network element determines the operation mode of the terminal device based on the network capability of the terminal device and the third private network information may be specifically that the access and mobility management network element determines the operation mode of the terminal device based on the network capability of the terminal device and information such as the private network service type. Specifically, a method for determining the operation mode by the access and mobility management network element is similar to the method for determining the operation mode by the unified data management network element in step 202 in the embodiment shown in FIG. 2. For details, refer to each other. Details are not described herein again.

The network capability of the terminal device is a network capability supported by the terminal device, and may include supporting access to a private network (for example, supporting access to an NPN network), supporting access to a public network (for example, supporting access to a PLMN network), or supporting access to both a private network and a public network (for example, supporting access to both an NPN network and a PLMN network).

In an optional implementation, in the scenario in which the private network configuration information is pushed at the area granularity, before step 301, the access and mobility management network element determines that the terminal device meets a configuration update condition, where the configuration update condition includes a triggering condition for triggering area information and/or time period information by the terminal device. For example, if the terminal device enters a specific area, the terminal device requires a service in a specific time period, or the terminal device enters a specific area in a specific time period, it may be considered that the terminal device triggers the configuration update condition, that is, the terminal device meets the configuration update condition.

Further, before determining that the terminal device meets the configuration update condition, the access and mobility management network element receives first event subscription information from the unified data management network element, where the event subscription information includes the third private network information and the triggering condition for updating the subscription information of the terminal device.

In an implementation, before determining that the terminal device meets the configuration update condition, the access and mobility management network element further receives second event subscription information from the policy control network element, where the second event subscription information includes a triggering condition for updating policy information of the terminal device.

The triggering condition for updating the subscription information of the terminal device and the triggering condition for updating the policy information of the terminal device are a same triggering condition, and may be both the triggering condition for triggering the area information and/or the time period information by the terminal device.

In another optional implementation, in the scenario in which the terminal device actively requests the private network configuration information, before step 303, the access and mobility management network element receives a configuration update request from the terminal device, where the configuration update request includes the identifier of the private network; the access and mobility management network element queries the unified data management network element for the subscription information of the terminal device based on the identifier of the private network, and determines that the terminal device can access the private network. For example, when the subscription information includes a mapping relationship between an identifier of the terminal device and an identifier of an authorized private network, the access and mobility management network element can query, based on the identifier of the terminal device, for a private network that can be accessed and whose identifier is in a private network identifier list carried by the terminal device. In other words, the terminal device may query for whether the private network corresponding to the identifier of the private network can be accessed, and when determining that the private network can be accessed, the access and mobility management network element determines that the terminal device can access the private network.

Specifically, when the private network type is the CAG, the identifier of the private network is a CAG ID; when the private network type is the standalone NPN, the identifier of the private network is a standalone NPN ID.

When subsequently initiating a configuration update procedure, the access and mobility management network element needs to send the operation mode to the terminal device. Therefore, the access and mobility management network element needs to receive a triggering condition for updating a configuration, including the first event subscription information and the second event subscription information, and determines the operation mode of the terminal device after a subscription event is triggered.

Step 304: The access and mobility management network element sends the operation mode to the unified data management network element.

It should be noted that the access and mobility management network element may not perform step 304, and the access and mobility management network element may indicate, through a service-oriented interface, the unified data management network element to update the subscription information, so that the unified data management network element determines the operation mode based on the subscription information. Specifically, the service-oriented interface may be Nudm_UECM_Update, Namf_EventExposure_Notify, or the like.

Step 305: The access and mobility management network element receives third updated network configuration information from the unified data management network element, where the third updated network configuration information includes the operation mode and the subscription information.

It should be noted that the operation mode may be included in the third updated network configuration information, as shown in step 305. Alternatively, the operation mode may be directly included in the subscription information of the terminal device. This is not limited in this application. Alternatively, the operation mode may be indicated based on the subscription information. For example, it indicates, based on the identifier of the private network in the subscription information, that the operation mode is a mode in which a private network is accessed.

In an implementation, when the private network type is the CAG, the unified data management network element obtains an updated CAG identifier list based on the fourth private network information, and then sends the updated CAG identifier list to the access and mobility management network element.

For example, when the subscription information in the fourth private network information includes the CAG identifier list, the unified data management network element may directly obtain the CAG identifier list from the subscription information.

Step 306: The access and mobility management network element sends the third updated network configuration information to the terminal device.

Step 307: The policy control network element receives the operation mode of the terminal device from the access and mobility management network element.

Step 308: The policy control network element determines fourth policy information based on the third policy information and the operation mode.

During specific implementation, the policy control network element further needs to determine the fourth policy information with reference to the private network service type. Specifically, the policy control network element determines the fourth policy information based on the third policy information, the private network service type, and the operation mode. For example, a method for determining the fourth policy information by the policy control network element is similar to the method for determining the second policy information by the policy control network element in step 206 in the embodiment shown in FIG. 2. For details, refer to each other. Details are not described herein again.

For example, the fourth policy information may be the same as the third policy information. In this case, policy information of the private network does not affect policy information of the public network. Alternatively, the fourth policy information may be different from the third policy information. In this case, policy information of the private network affects policy information of the public network.

Step 309: The policy control network element sends fourth updated network configuration information to the terminal device, where the fourth updated network configuration information includes the fourth policy information, and the fourth policy information is related to the operation mode.

That the fourth policy information is related to the operation mode specifically means that specific content of the fourth policy information is related to the operation mode, that is, different operation modes correspond to different specific content of the fourth policy information.

Specifically, the fourth updated network configuration information further includes at least one of the following: the private network service type and the operation mode that is of the terminal device.

In an optional implementation, the operation mode of the terminal device may alternatively be included in the fourth policy information.

Step 310: The terminal device accesses the private network based on updated network configuration information, and routes application traffic based on the updated network configuration information.

In an optional implementation, the updated network configuration information may include the third updated network configuration information received by the terminal device from the access and mobility management network element. In this case, the private network type may be the standalone NPN.

In another optional implementation, the updated network configuration information may include the third updated network configuration information received by the terminal device from the access and mobility management network element, and the fourth updated network configuration information received by the terminal device from the policy control network element. In this case, the private network type may be the CAG or the standalone NPN.

In a case, when the private network type is the CAG, in step 310, the terminal device may determine, based on the operation mode (for example, allowed to access a CAG cell) and a CAG network selection policy (a CAG ID and priority information), whether to attempt to access a CAG network. In addition, the terminal device routes application traffic based on a routing policy (for example, a URSP) (where for example, the data traffic is routed to the CAG network, or may be routed to both the CAG network and the public network).

In another case, when the private network type is the standalone NPN, in step 310, the terminal device may determine, based on the operation mode (for example, allowed to access a standalone NPN cell) and a standalone NPN network selection policy (a standalone NPN ID and priority information), whether to attempt to access a standalone NPN network. In addition, the terminal device routes application traffic based on a routing policy (for example, a URSP) (where for example, the data traffic is routed to the standalone NPN network, or may be routed to both the standalone NPN network and the public network).

For example, after a private network service ends, each network element or device needs to restore network configuration information used before update. Specifically, the following manners may be included.

In a manner, the private network server sends private network service disconnection requests to the unified data management network element, the policy control network element, and the access and mobility management network element, that is, requests to disconnect services; then each network element or device restores the network configuration information used before update.

In another manner, each of the terminal device, the unified data management network element, the policy control network element, and the access and mobility management network element is provided with a timer, and restores, after the timer expires, the network configuration information used before update.

In the scenario in which the private network configuration information is pushed at the area granularity, in addition to the foregoing manners, another manner is: When determining that the terminal device meets a triggering condition for configuration restoration, the access and mobility management network element restores the network configuration information used before update, and sends private network service disconnection requests to the terminal device, the policy control network element, and the unified data management network element. Specifically, the triggering condition for configuration restoration may be that the terminal device leaves a specific area, the terminal device does not require a service in a specific time period, the terminal device leaves a specific area in a specific time period, or the like.

It should be noted that in the standalone NPN, a possibility of affecting the public network (network selection) is relatively small. Therefore, step 307 to step 310 may be optional steps.

According to the information configuration method provided in this embodiment of this application, after determining the operation mode of the terminal device based on the third private network information of the terminal device, the access and mobility management network element sends the third updated network configuration information to the terminal device, and after determining the fourth policy information based on the third policy information and the operation mode, the policy control network element sends the fourth updated network configuration information to the terminal device, so that the terminal device accesses the private network based on the updated network configuration information, and routes the application traffic based on the updated network configuration information. According to the foregoing method, private network configuration information can be flexibly updated through the public network.

It should be noted that in this embodiment of this application, a sequence of the steps is merely an example, and a sequence of performing the steps is not limited. In different cases, a sequence of some steps may be changed, and details are not described herein again.

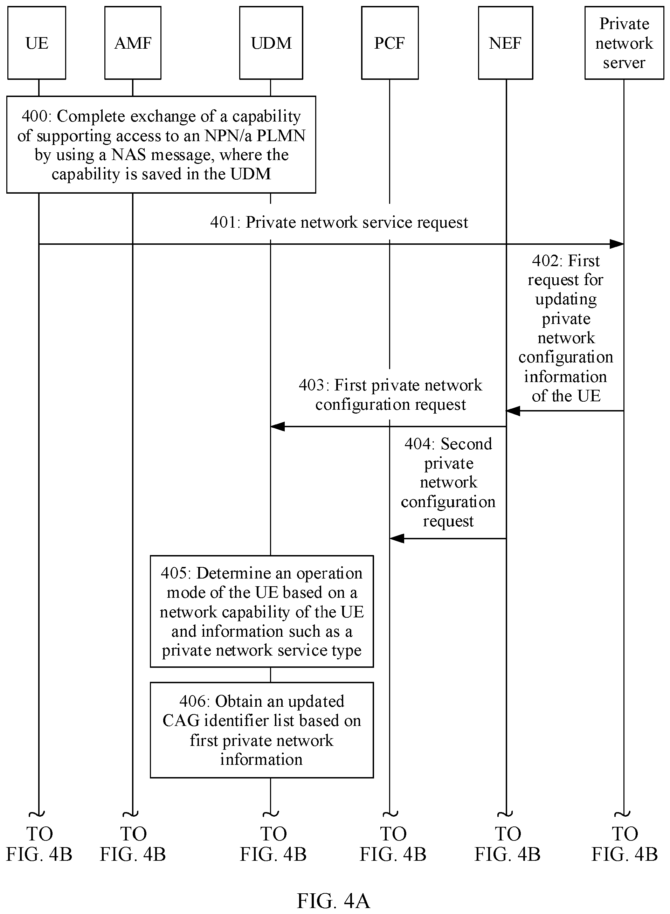

Based on the foregoing embodiments, the following describes the information configuration method provided in the embodiments of this application in detail by using specific examples, for example, embodiments shown in FIG. 4A to FIG. 9B. In the following examples, an example in which a public network is a PLMN, a private network is an NPN, a unified data management network element is a UDM, an access and mobility management network element is an AMF, a policy control network element is a PCF, and a terminal device is UE is used for description.

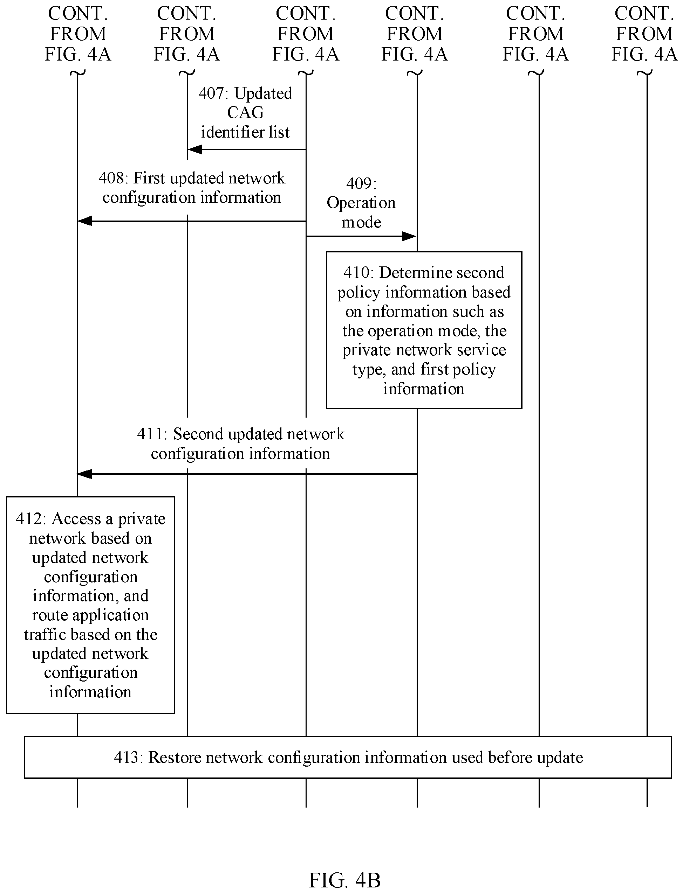

As shown in FIG. 4A and FIG. 4B, this application shows an example of an information configuration method. In this example, for a private network type CAG, UE actively pushes private network configuration information. An implementation prerequisite is that an NPN application is installed on the UE, and the UE can be connected to an application server in an NPN through a public network PLMN. Specifically, a specific procedure of this example may include the following steps.

Step 400: The UE and a public network core network complete exchange of a capability of supporting access to an NPN/a PLMN by using a non-access stratum (non-access stratum, NAS) message, and the capability is saved in a UDM.

It should be noted that a network capability of the UE mentioned in this embodiment of this application mainly refers to the capability, that is, the capability of supporting access to an NPN/a PLMN.

Step 401: The UE sends a private network service request to a private network server by using a private network application.

Specifically, the UE requests a private network service from the private network server by using a specific private network application program (that is, the private network application). In this case, the UE is connected to the private network server through the public network PLMN, and is authorized by the private network server (where authorization conditions may be information such as a user name/password, a current location, and a request time period).

Step 402: The private network server sends a first request for updating private network configuration information of the UE to a NEF.

Specifically, step 402 implements that the private network server requests, through a capability exposure platform NEF, the public network to update the private network configuration information of the UE. The first request for updating the private network configuration information may include a provided private network service type and NPN subscription information such as a CAG ID list (whitelist/blacklist) and DNNs, and may further include NPN UE policy information such as a network selection policy and a routing policy.

Step 403: The NEF sends a first private network configuration request to the UDM, where the first private network configuration request includes first private network information of the UE.

In an optional implementation, the first private network information includes at least one of the following: the private network service type, and subscription information (NPN subscription information) of the UE such as the CAG ID list (whitelist/blacklist) and the DNNs. That is, in step 403, the NEF requests the UDM to update NPN subscription information of the UE.

Step 404: The NEF sends a second private network configuration request to a PCF, where the second private network configuration request includes second private network information of the UE, and the second private network information includes first policy information.

Specifically, the first policy information includes a private network selection policy (that is, the NPN network selection policy) and the routing policy.

Optionally, the second private network information may further include the private network service type.

Step 405: The UDM performs authentication on the first private network configuration request, and determines an operation mode of the UE based on the network capability of the UE and information such as the private network service type.

Specifically, the information such as the private network service type is a specific example of the first private network information.

Step 406: The UDM obtains an updated CAG identifier list based on the first private network information.

In an implementation, the first private network information includes the subscription information of the UE, and the UDM directly obtains the CAG identifier list from the subscription information.

Step 407: The UDM sends the updated CAG identifier list to an AMF.

In an optional implementation, the UDM needs to determine whether to initiate a private network configuration update procedure of the UE, and if the subscription information of the UE needs to be updated, the UDM needs to update a CAG ID list (where the UE is to access a whitelist or a blacklist) on the AMF, so that a network side verifies whether a group that the UE is to access belongs to the whitelist or the blacklist.

Step 408: The UDM sends first updated network configuration information to the UE, where the first updated network configuration information includes the operation mode and the subscription information of the UE.

Step 409: The UDM sends the operation mode to the PCF.

That is, the UDM notifies, to the PCF, whether the UE is allowed to access only an NPN, only a public network PLMN, or both an NPN and a PLMN.

Step 410: The PCF determines second policy information based on information such as the operation mode, the private network service type, and the first policy information.

Specifically, that the PCF determines the second policy information based on the information such as the operation mode, the private network service type, and the first policy information is specifically implemented as that the PCF updates the routing policy and the CAG network selection policy based on the information such as the operation mode, the private network service type, and the first policy information.

Specifically, the second policy information may be the same as the first policy information. In this case, policy information of a private network does not affect policy information of the public network. Alternatively, the second policy information may be different from the first policy information. In this case, policy information of a private network affects policy information of the public network.

Step 411: The PCF sends second updated network configuration information to the UE, where the second updated network configuration information includes the second policy information, and the second policy information is related to the operation mode.

Optionally, the second updated network configuration information further includes at least one of the following: the private network service type and the operation mode that is of the UE.

In another possible implementation, the operation mode may be directly included in the second policy information.

Step 412: The UE accesses the private network based on updated network configuration information, and routes application traffic based on the updated network configuration information.

The updated network configuration information may include the first updated network configuration information and the second updated configuration information.

Specifically, the UE determines, based on the operation mode (for example, allowed to access a CAG cell) and a CAG network selection policy (a CAG ID and priority information) in the updated network configuration information, whether to attempt to access a CAG network. In addition, the UE routes application traffic based on a routing policy (for example, a URSP) (where for example, the data traffic is routed to the CAG network, or may be routed to both the CAG network and the public network).

Step 413: Each network element, each device, the UE, and the like restore network configuration information used before update.

In an implementation, the UE requests, by using a specific application, to disconnect the service from the private network server (through a PLMN connection or an NPN connection).

In another implementation, the private network server requests, from the PLMN through the NEF, to restore the network configuration information, that is, the private network server may request, through the NEF, to disconnect services from the UDM, the PCF, the AMF, and the like.

In still another implementation, each of the UDM, the PCF, the AMF, the UE, and the like is provided with a timer, and restores, after the timer expires, the network configuration information used before update.

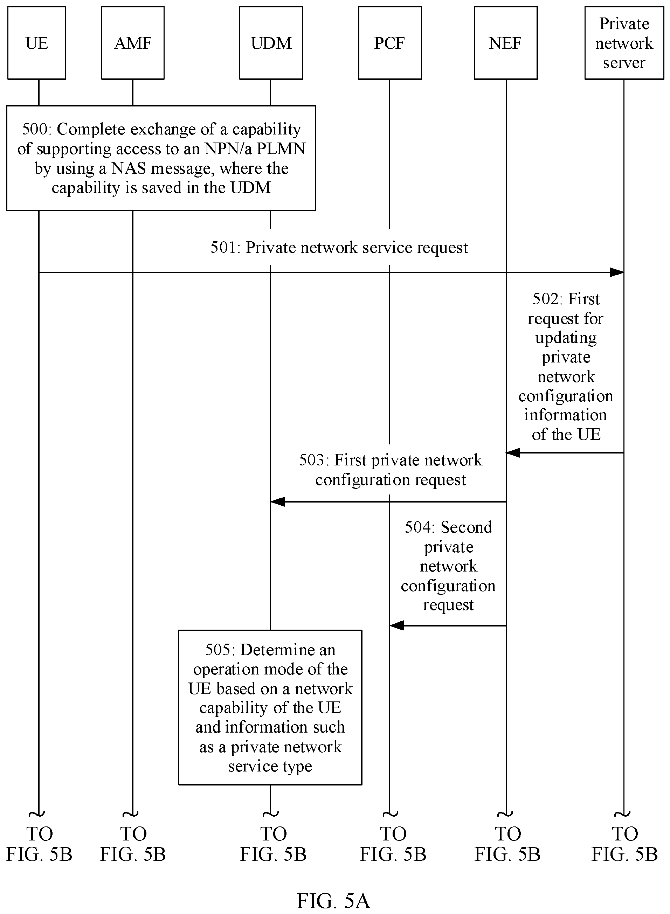

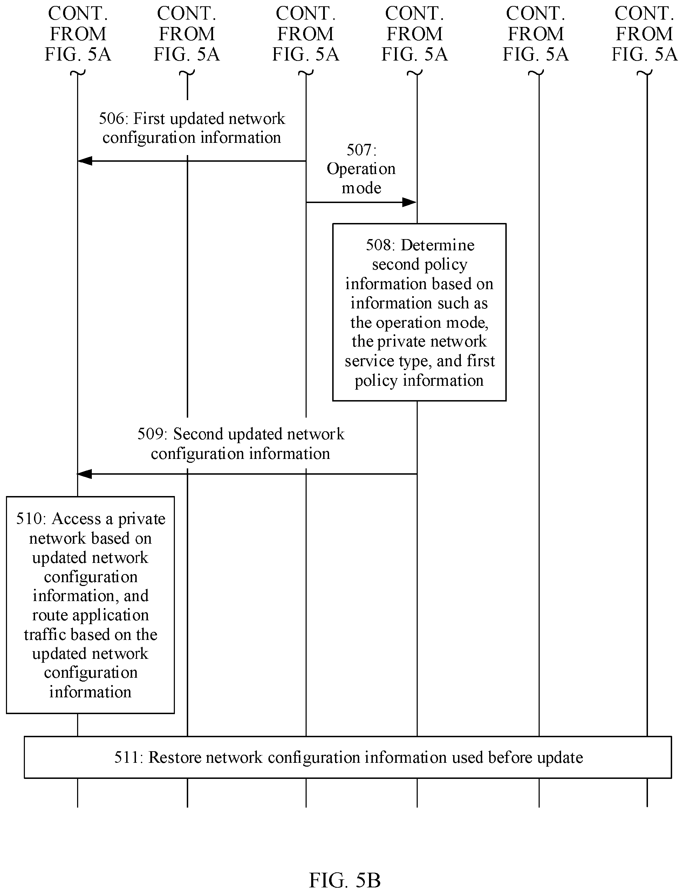

As shown in FIG. 5A and FIG. 5B, this application shows an example of another information configuration method. In this example, for a private network type standalone NPN, UE actively pushes private network configuration information. An implementation prerequisite is that an NPN application is installed on the UE, and the UE can be connected to an application server in an NPN through a public network PLMN. Specifically, a specific procedure of this example may include the following steps.

Step 500 to step 505 are similar to step 400 to step 405 in the example shown in FIG. 4A and FIG. 4B. For details, refer to each other. Details are not described herein again.

Step 506 to step 511 are similar to step 408 to step 413 in the example shown in FIG. 4A and FIG. 4B. For details, refer to each other. Details are not described herein again.

It should be noted that, in this example, a CAG in a similar operation or content in FIG. 4A and FIG. 4B is a standalone NPN. For example, in step 510, the UE determines, based on an operation mode (for example, allowed to access a standalone cell) and a standalone NPN network selection policy (a standalone NPN ID and priority information) in updated network configuration information, whether to attempt to access a standalone NPN network. In addition, the UE routes application traffic based on a routing policy (for example, a URSP) (where for example, the data traffic is routed to the standalone NPN network, or may be routed to both the standalone NPN network and the public network). Other cases are similar and are not listed in detail herein.

It should be noted that in the standalone NPN, a possibility of affecting the public network PLMN (network selection) is relatively small. Therefore, step 504 and step 507 to step 509 may be optional steps.

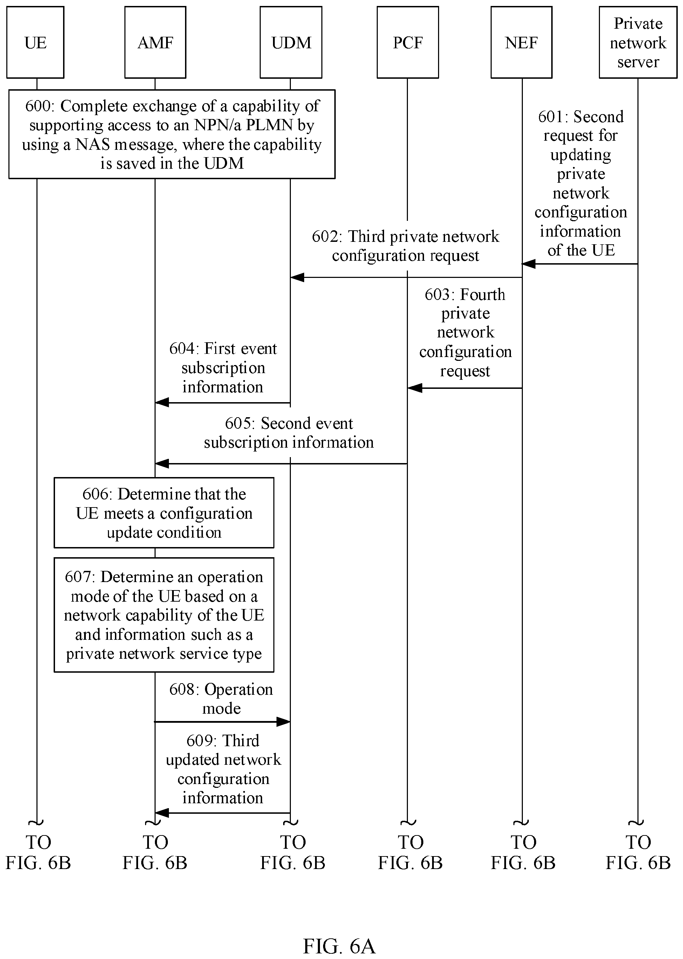

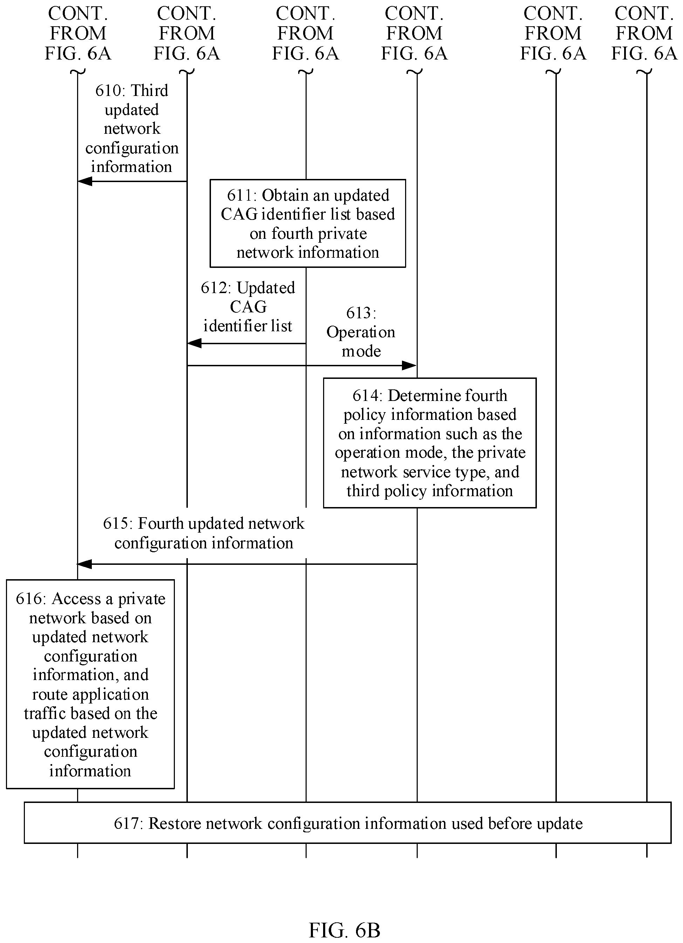

As shown in FIG. 6A and FIG. 6B, this application shows an example of another information configuration method. In this example, for a private network type CAG, private network configuration information is pushed at an area granularity. An implementation prerequisite is that a private network server sends the configuration information to a PLMN in advance, and subscribes to a configuration update event based on conditions such as an area and/or a time period. Specifically, a specific procedure of this example may include the following steps.

Step 600 is similar to step 400 in the example shown in FIG. 4A and FIG. 4B. For details, refer to each other. Details are not described herein again.

Step 601: The private network server sends a second request for updating private network configuration information of UE to a NEF.

Specifically, the private network server sends the private network configuration information to a public network core network in advance through the NEF. The second request for updating the private network configuration information of the UE includes the private network configuration information, and the private network configuration information includes a provided private network service type and NPN subscription information such as a CAG ID list (whitelist/blacklist) and DNNs, further includes NPN UE policy information such as a network selection policy and a routing policy, and further includes an update triggering condition such as a triggering condition for triggering area information and/or time period information, where the update triggering condition is used to indicate the public network to update private network configuration information of at least one UE based on the update triggering condition.

Step 602: The NEF sends a third private network configuration request to a UDM, where the third private network configuration request includes fourth private network information.

Specifically, the fourth private network information may include subscription information of the UE and a triggering condition for updating subscription information of the UE. That is, the NEF requests the UDM to update NPN subscription information of the UE such as a CAG ID list (whitelist/blacklist) and DNNs.

The fourth private network information further includes the private network service type.

Step 603: The NEF sends a fourth private network configuration request to a PCF, where the fourth private network configuration request includes fifth private network information, and the fifth private network information includes third policy information and a triggering condition for updating policy information of the terminal device.

Specifically, the third policy information includes the UE policy information such as the NPN network selection policy and the routing policy.

Optionally, the fifth private network information further includes the private network service type.

Step 604: The UDM sends first event subscription information to an AMF, where the first event subscription information includes third private network information and the triggering condition for updating the subscription information of the UE.

The third private network information includes the private network service type.

The triggering condition for updating the subscription information of the UE is the area information, the time period information, or another condition.

Step 605: The PCF sends second event subscription information to the AMF, where the second event subscription information includes the triggering condition for updating the policy information of the terminal device.

The triggering condition for updating the policy information of the terminal device may be the area information, the time period information, or another condition.

Step 606: The AMF determines that the UE meets a configuration update condition, where the configuration update condition includes the triggering condition for triggering the area information and/or the time period information by the UE.

Step 607: The AMF determines an operation mode of the UE based on a network capability of the UE and information such as the private network service type.

Specifically, the information such as the private network service type is a specific example of the third private network information.

Step 608: The AMF sends the operation mode to the UDM.

Step 609: The UDM sends third updated network configuration information to the AMF, where the third updated network configuration information includes the operation mode and the subscription information.

Step 610: The AMF sends the third updated network configuration information to the UE.

Step 611: The UDM obtains an updated CAG identifier list based on the fourth private network information.

Step 612: The UDM sends the updated CAG identifier list to the AMF.

In an optional implementation, if the subscription information of the UE needs to be updated, the UDM needs to update a CAG ID list (where the UE is to access a whitelist or a blacklist) on the network element AMF, so that a network side verifies whether a group that the UE is to access belongs to the whitelist or the blacklist.

Step 613: The AMF sends the operation mode to the PCF.

Step 614: The PCF determines fourth policy information based on information such as the operation mode, the private network service type, and the third policy information.

Specifically, that the PCF determines the fourth policy information based on the information such as the operation mode, the private network service type, and the third policy information is specifically implemented as that the PCF updates the routing policy and the CAG network selection policy based on the information such as the operation mode, the private network service type, and the third policy information.

Specifically, the fourth policy information may be the same as the third policy information. In this case, policy information of a private network does not affect policy information of the public network. Alternatively, the fourth policy information may be different from the third policy information. In this case, policy information of a private network affects policy information of the public network.

Step 615: The PCF sends fourth updated network configuration information to the UE, where the fourth updated network configuration information includes the fourth policy information, and the fourth policy information is related to the operation mode.

Optionally, the fourth updated network configuration information further includes at least one of the following: the private network service type and the operation mode that is of the terminal device.

In another possible implementation, the operation mode may be directly included in the fourth policy information.

Step 616: The UE accesses the private network based on updated network configuration information, and routes application traffic based on the updated network configuration information.

The updated network configuration information may include the third updated network configuration information and the fourth updated configuration information.

Specifically, the UE determines, based on the operation mode (for example, allowed to access a CAG cell) and a CAG network selection policy (a CAG ID and priority information) in the updated network configuration information, whether to attempt to access a CAG network. In addition, the UE routes application traffic based on a routing policy (for example, a URSP) (where for example, the data traffic is routed to the CAG network, or may be routed to both the CAG network and the public network).

Step 617: Each network element, each device, the UE, and the like restore network configuration information used before update.

In an implementation, the private network server requests, from the PLMN through the NEF, to restore the network configuration information, that is, the private network server may request, through the NEF, to disconnect services from the UDM, the PCF, the AMF, and the like, and the private network server requests to disconnect a service from the UE.

In another implementation, each of the UDM, the PCF, the AMF, the UE, and the like is provided with a timer, and restores, after the timer expires, the network configuration information used before update.

In another implementation, when determining that the UE meets a triggering condition for configuration restoration, the AMF restores the network configuration information used before update, and requests to disconnect services from the UE, the PCF, and the UDM. Then, the UE, the PCF, and the UDM restore, after receiving requests for disconnecting the services, the network configuration information used before update.

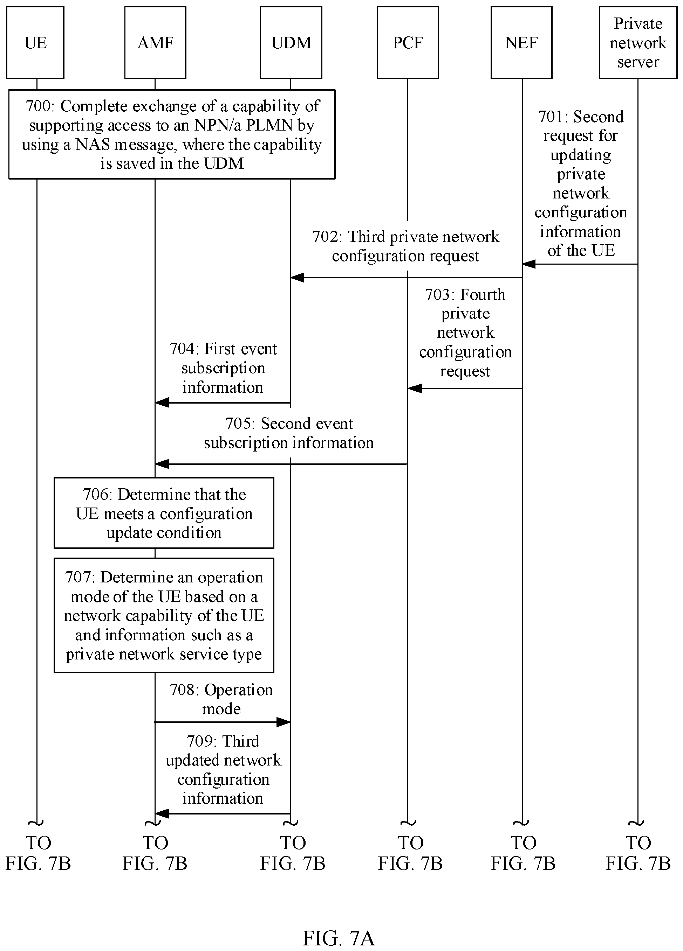

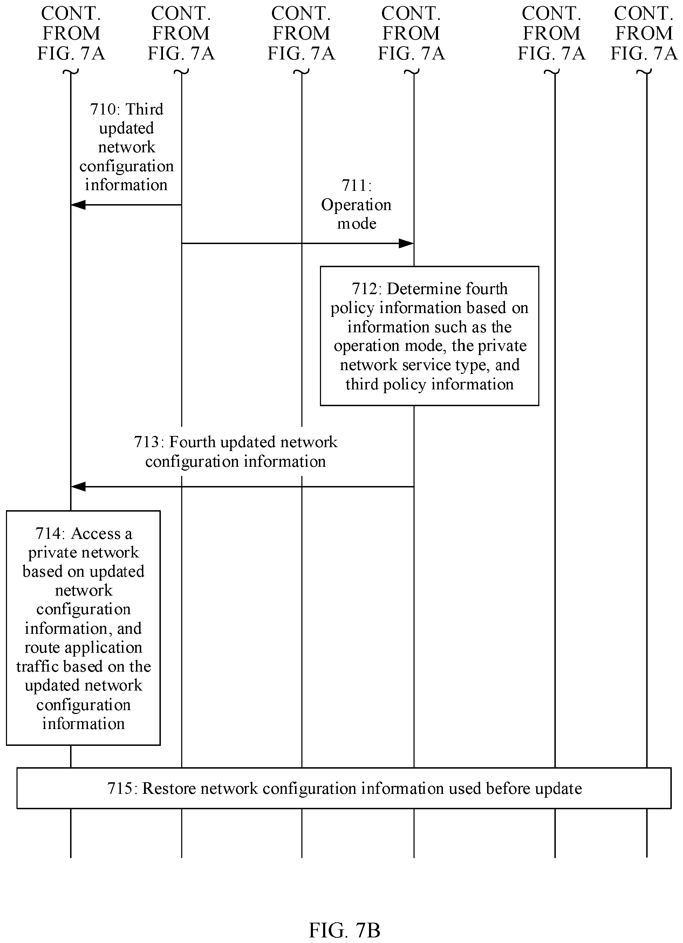

As shown in FIG. 7A and FIG. 7B, this application shows an example of another information configuration method. In this example, for a private network type standalone NPN, private network configuration information is pushed at an area granularity. An implementation prerequisite is that a private network server sends the configuration information to a PLMN in advance, and subscribes to a configuration update event based on conditions such as an area and/or a time period. Specifically, a specific procedure of this example may include the following steps.

Step 700 to step 710 are similar to step 600 to step 610 in the example shown in FIG. 6A and FIG. 6B. For details, refer to each other. Details are not described herein again.

Step 711 to step 715 are similar to step 613 to step 617 in the example shown in FIG. 6A and FIG. 6B. For details, refer to each other. Details are not described herein again.

It should be noted that, in this example, a CAG in a similar operation or content in FIG. 6A and FIG. 6B is a standalone NPN. For example, in step 616, the UE determines, based on an operation mode (for example, allowed to access a standalone NPN cell) and a standalone NPN network selection policy (a standalone NPN ID and priority information) in updated network configuration information, whether to attempt to access a standalone NPN network. In addition, the UE routes application traffic based on a routing policy (for example, a URSP) (where for example, the data traffic is routed to the standalone NPN network, or may be routed to both the standalone NPN network and the public network). Other cases are similar and are not listed in detail herein.

It should be noted that in the standalone NPN, a possibility of affecting the public network PLMN (network selection) is relatively small. Therefore, step 703, step 705, and step 711 to step 713 may be optional steps.

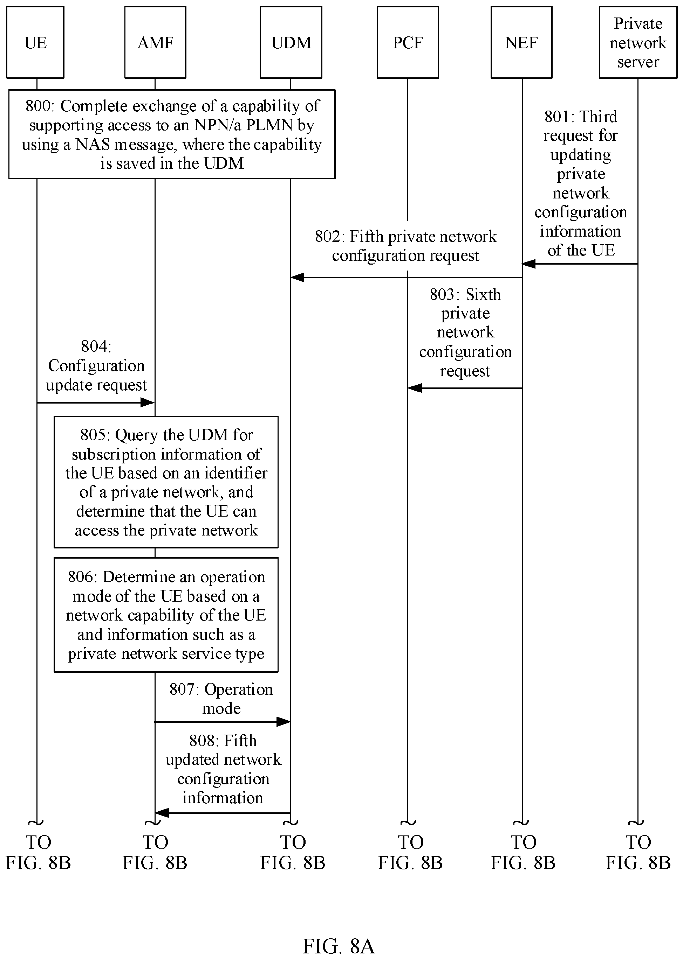

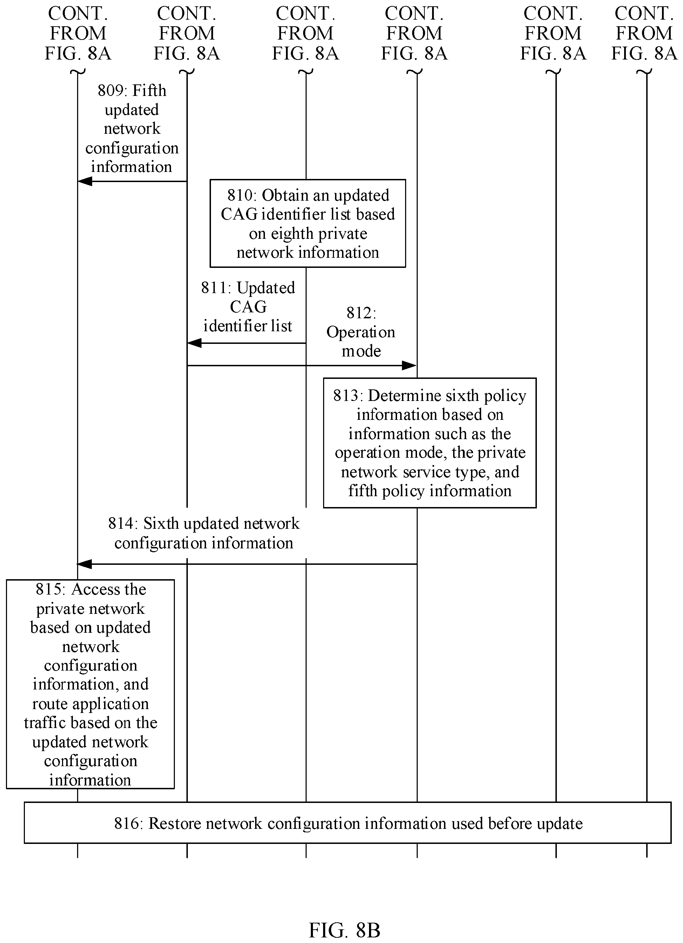

As shown in FIG. 8A and FIG. 8B, this application shows an example of another information configuration method. In this example, for a private network type CAG, UE actively requests private network configuration information. Specifically, a specific procedure of this example may include the following steps.

Step 800 is similar to step 400 in the example shown in FIG. 4A and FIG. 4B. For details, refer to each other. Details are not described herein again.

Step 801: A private network server sends a third request for updating private network configuration information of the UE to a NEF.

Specifically, the third request for updating the private network configuration information of the UE is similar to the first request for updating the private network configuration information of the UE in step 402 in the example shown in FIG. 4A and FIG. 4B. For details, refer to each other. Details are not described herein again.

Step 802: The NEF sends a fifth private network configuration request to a UDM, where the fifth private network configuration request includes eighth private network information of the UE.

The eighth private network information includes subscription information of the UE such as a CAG ID list (whitelist/blacklist) and DNNs.

Optionally, the private network information may further include a private network service type and the like.

Step 803: The NEF sends a sixth private network configuration request to a PCF, where the sixth private network configuration request includes seventh private network information of the UE, and the seventh private network information includes fifth policy information.

Specifically, the fifth policy information may include an NPN network selection policy and a routing policy.

Step 804: The UE sends a configuration update request to an AMF, where the configuration update request includes an identifier of a private network.

Specifically, the UE requests, by using a NAS message, the AMF to update the configuration information, where the configuration update request includes identification information such as a CAG ID.

Step 805: The AMF queries the UDM for the subscription information of the UE based on the identifier of the private network, and determines that the UE can access the private network.

Specifically, the AMF queries a UDM (or UDR) database based on the CAG identification information requested by the UE, and determines, based on the subscription information of the UE, that the UE can access a CAG network.

Step 806: The AMF determines an operation mode of the UE based on a network capability of the UE and information such as the private network service type.

Specifically, the information such as the private network service type is a specific example of sixth private network information.

Optionally, the sixth private network information may include the private network service type.

Step 807: The AMF sends the operation mode to the UDM.

Step 808: The UDM sends fifth updated network configuration information to the AMF, where the fifth updated network configuration information includes the operation mode and the subscription information.

Step 809: The AMF sends the fifth updated network configuration information to the UE.

Step 810: The UDM obtains an updated CAG identifier list based on the eighth private network information.

Step 811: The UDM sends the updated CAG identifier list to the AMF.

Step 812: The AMF sends the operation mode to the PCF.

Step 813: The PCF determines sixth policy information based on the fifth policy information, the private network service type, and the operation mode.

Specifically, that the PCF determines the sixth policy information based on information such as the operation mode, the private network service type, and the fifth policy information is specifically implemented as that the PCF updates the routing policy and the CAG network selection policy based on the information such as the operation mode, the private network service type, and the fifth policy information.

Specifically, the sixth policy information may be the same as the fifth policy information. In this case, policy information of the private network does not affect policy information of a public network. Alternatively, the sixth policy information may be different from the fifth policy information. In this case, policy information of the private network affects policy information of a public network.

Step 814: The PCF sends sixth updated network configuration information to the UE, where the sixth updated network configuration information includes the sixth policy information, and the sixth policy information is related to the operation mode.

Step 815: The UE accesses the private network based on updated network configuration information, and routes application traffic based on the updated network configuration information.

The updated network configuration information may include the third updated network configuration information and the fourth updated configuration information.

Specifically, the UE determines, based on the operation mode (for example, allowed to access a CAG cell) and a CAG network selection policy (a CAG ID and priority information) in the updated network configuration information, whether to attempt to access a CAG network. In addition, the UE routes application traffic based on a routing policy (for example, a URSP) (where for example, the data traffic is routed to the CAG network, or may be routed to both the CAG network and the public network).

Step 816: Each network element, each device, the UE, and the like restore network configuration information used before update.

In an implementation, the private network server requests, from the PLMN through the NEF, to restore the network configuration information, that is, the private network server may request, through the NEF, to disconnect services from the UDM, the PCF, the AMF, and the like, and the private network server requests to disconnect a service from the UE.

In another implementation, each of the UDM, the PCF, the AMF, the UE, and the like is provided with a timer, and restores, after the timer expires, the network configuration information used before update.

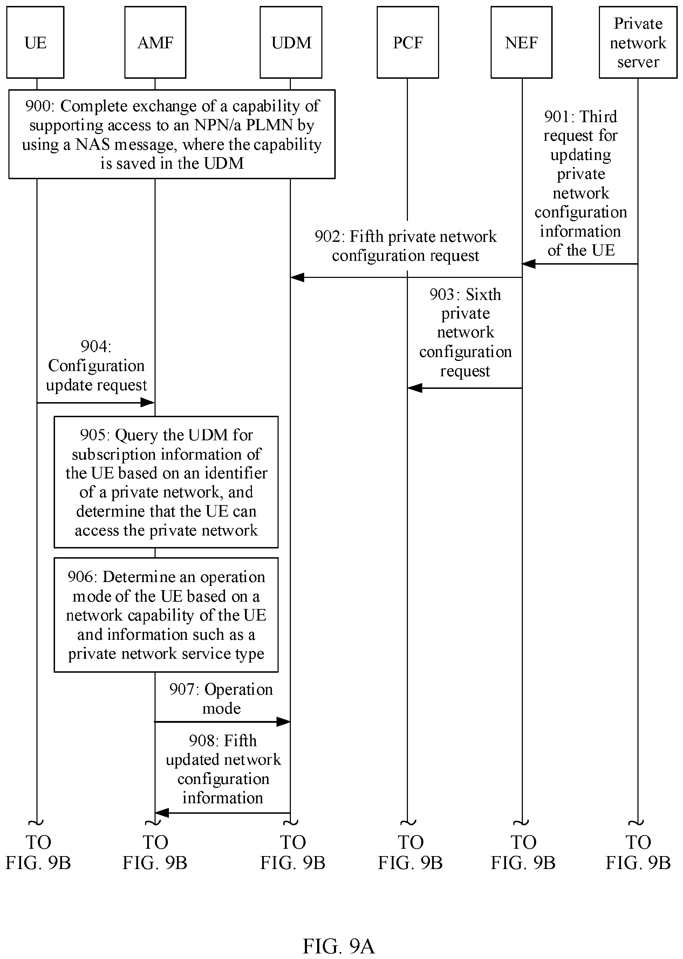

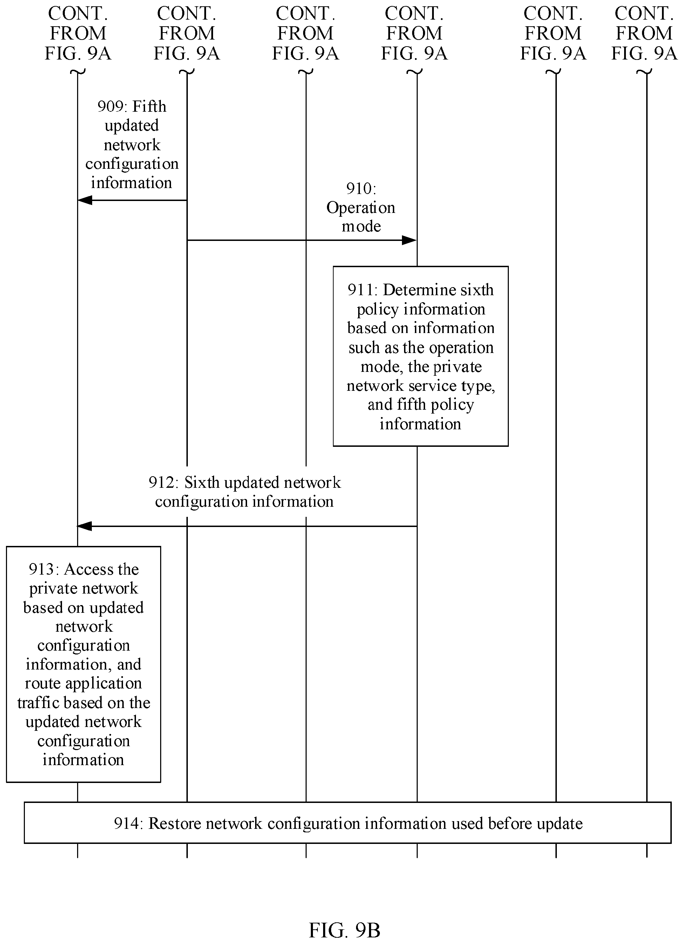

As shown in FIG. 9A and FIG. 9B, this application shows an example of another information configuration method. In this example, for a private network type standalone NPN, UE actively requests private network configuration information. Specifically, a specific procedure of this example may include the following steps.

Step 900 to step 909 are similar to step 800 to step 809 in the example shown in FIG. 8A and FIG. 8B. For details, refer to each other. Details are not described herein again.

Step 910 to step 914 are similar to step 812 to step 816 in the example shown in FIG. 8A and FIG. 8B. For details, refer to each other. Details are not described herein again.

It should be noted that, in this example, a CAG in a similar operation or content in FIG. 8A and FIG. 8B is a standalone NPN. For example, in step 815, the UE determines, based on an operation mode (for example, allowed to access a standalone NPN cell) and a standalone NPN network selection policy (a standalone NPN ID and priority information) in updated network configuration information, whether to attempt to access a standalone NPN network. In addition, the UE routes application traffic based on a routing policy (for example, a URSP) (where for example, the data traffic is routed to the standalone NPN network, or may be routed to both the standalone NPN network and the public network). Other cases are similar and are not listed in detail herein.

It should be noted that in the standalone NPN, a possibility of affecting the public network PLMN (network selection) is relatively small. Therefore, step 903 and step 910 to step 912 may be optional steps.

It should be noted that, in the foregoing examples, only an example in which the private network server sends the private network configuration information of the UE through the NEF is used for description. If an NPN server (namely, the private network server) is located in an operator management domain, the NPN server may directly interact with a public network core network element.

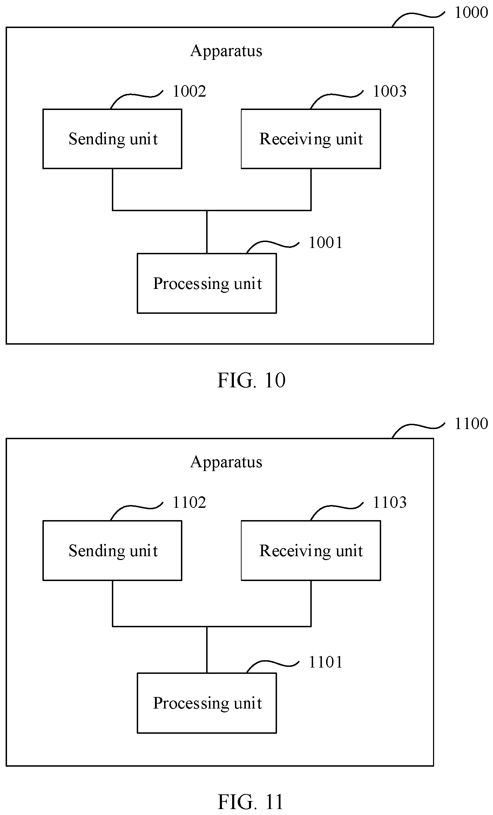

Based on an inventive concept the same as that of the method embodiments, an embodiment of this application further provides an apparatus. The apparatus is used in a unified data management network element. The apparatus may be specifically a processor, a chip or a chip system, a function module, or the like in the unified data management. With reference to FIG. 10, the apparatus 1000 may include a processing unit 1001 and a sending unit 1002. Optionally, the apparatus may further include a receiving unit 1003. The receiving unit 1003 is used by the apparatus 1000 to receive information, the sending unit 1002 is used by the apparatus 1000 to send information, and the processing unit 1001 is configured to control and manage an action of the apparatus 1000. The processing unit 1002 may be further configured to indicate a processing process related to the unified data management network element (for example, a UDM) in any of the foregoing embodiments and/or another process of the technical solutions described in this application. Specifically, the processing unit 1001 may control the receiving unit 1003 and control steps performed by the sending unit 1002. For details, refer to the foregoing embodiments. Repeated parts are not described herein again.

When being implemented by hardware, the processing unit 1001 may be a processor, a processing circuit, or the like; the sending unit 1002 may be a transmitter, a transmitter circuit, or the like; the receiving unit 1003 may be a receiver, a receiver circuit, or the like. The sending unit 1002 and the receiving unit 1003 may constitute a transceiver.

Based on an inventive concept the same as that of the method embodiments, an embodiment of this application further provides an apparatus. The apparatus is used in a policy control network element. The apparatus may be specifically a processor, a chip or a chip system, a function module, or the like in the policy control network element. With reference to FIG. 11, the apparatus 1100 may include a processing unit 1101, a sending unit 1102, and a receiving unit 1103. The receiving unit 1103 is used by the apparatus 1100 to receive information, the sending unit 1102 is used by the apparatus 1100 to send information, and the processing unit 1101 is configured to control and manage an action of the apparatus 1100. The processing unit 1101 may be further configured to indicate a processing process related to the policy control network element (for example, a PCF) in any of the foregoing embodiments and/or another process of the technical solutions described in this application. Specifically, the processing unit 1101 may control the receiving unit 1103 and control steps performed by the sending unit 1102. For details, refer to the foregoing embodiments. Repeated parts are not described herein again.

When being implemented by hardware, the processing unit 1101 may be a processor, a processing circuit, or the like; the sending unit 1102 may be a transmitter, a transmitter circuit, or the like; the receiving unit 1103 may be a receiver, a receiver circuit, or the like. The sending unit 1102 and the receiving unit 1103 may constitute a transceiver.

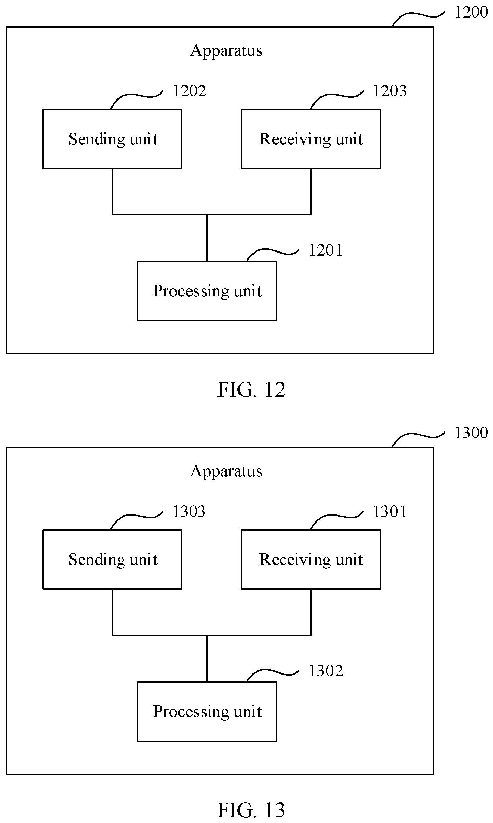

Based on an inventive concept the same as that of the method embodiments, an embodiment of this application further provides an apparatus. The apparatus is used in an access and mobility management network element. The apparatus may be specifically a processor, a chip or a chip system, a function module, or the like in the access and mobility management network element. With reference to FIG. 12, the apparatus 1200 may include a processing unit 1201, a sending unit 1202, and a receiving unit 1203. The receiving unit 1203 is used by the apparatus 1200 to receive information, the sending unit 1202 is used by the apparatus 1200 to send information, and the processing unit 1201 is configured to control and manage an action of the apparatus 1200. The processing unit 1201 may be further configured to indicate a processing process related to the access and mobility management network element (for example, an AMF) in any of the foregoing embodiments and/or another process of the technical solutions described in this application. Specifically, the processing unit 1201 may control the receiving unit 1203 and control steps performed by the sending unit 1202. For details, refer to the foregoing embodiments. Repeated parts are not described herein again.

When being implemented by hardware, the processing unit 1201 may be a processor, a processing circuit, or the like; the sending unit 1202 may be a transmitter, a transmitter circuit, or the like; the receiving unit 1203 may be a receiver, a receiver circuit, or the like. The sending unit 1202 and the receiving unit 1203 may constitute a transceiver.

Based on an inventive concept the same as that of the method embodiments, an embodiment of this application further provides an apparatus. The apparatus is used in a terminal device. The apparatus may be specifically a processor, a chip or a chip system, a function module, or the like in the terminal device. With reference to FIG. 13, the apparatus 1300 may include a receiving unit 1301 and a processing unit 1302. Optionally, the apparatus may further include a sending unit 1303. The receiving unit 1301 is used by the apparatus 1300 to receive information, and the processing unit 1302 is configured to control and manage an action of the apparatus 1300. The processing unit 1302 may be further configured to indicate a processing process related to the terminal device in any of the foregoing embodiments and/or another process of the technical solutions described in this application. Specifically, the processing unit 1302 may control steps performed by the receiving unit 1301 and control steps performed by the sending unit 1303. For details, refer to the foregoing embodiments. Repeated parts are not described herein again.

When being implemented by hardware, the processing unit 1302 may be a processor, a processing circuit, or the like; the sending unit 1303 may be a transmitter, a transmitter circuit, or the like; the receiving unit 1301 may be a receiver, a receiver circuit, or the like. The sending unit 1303 and the receiving unit 1301 may constitute a transceiver.

It should be noted that in the embodiments of this application, division into the units is an example and is merely logical function division, and may be other division during actual implementation. Function units in the embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to a current technology, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the method described in the embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

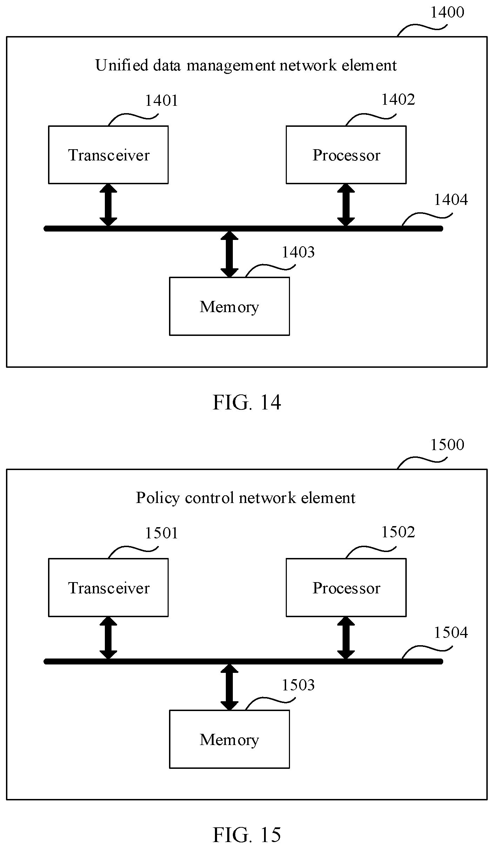

Based on the foregoing embodiments, an embodiment of this application further provides a unified data management network element, configured to implement the information configuration method. With reference to FIG. 14, the unified data management network element 1400 may include a transceiver 1401 and a processor 1402. Optionally, the unified data management network element 1400 may further include a memory 1403. The memory 1403 may be disposed inside the unified data management network element 1400, or may be disposed outside the unified data management network element 1400. The processor 1402 controls the transceiver 1401 to send and receive data, and is configured to implement the method performed by the unified data management network element (for example, the UDM) in FIG. 2 to FIG. 9B.

Specifically, the processor 1402 may be a central processing unit (central processing unit, CPU), a network processor (network processor, NP), or a combination of a CPU and an NP. The processor 1402 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), generic array logic (generic array logic, GAL), or any combination thereof.

The transceiver 1401, the processor 1402, and the memory 1403 are connected to each other. Optionally, the transceiver 1401, the processor 1402, and the memory 1403 are connected to each other through a bus 1404. The bus 1404 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 14, but this does not mean that there is only one bus or only one type of bus.

In an optional implementation, the memory 1403 is configured to store a program and the like. Specifically, the program may include program code, and the program code includes computer operation instructions. The memory 1403 may include a RAM, and may further include a non-volatile memory (non-volatile memory), for example, one or more magnetic disk memories. The processor 1402 executes the application program stored in the memory 1403 to implement the foregoing function, to implement the information configuration method provided in the embodiments of this application.

In an embodiment, when the unified data management network element is configured to implement the information configuration method shown in FIG. 2, the unified data management network element may specifically include:
the transceiver 1401, configured to send and receive data; and
the processor 1402, configured to: determine an operation mode of a terminal device based on first private network information of the terminal device; and
control the transceiver 1401 to send first updated network configuration information to the terminal device, where the first updated network configuration information includes the operation mode and subscription information of the terminal device.

In an implementation, the processor 1402 is further configured to: before determining the operation mode of the terminal device based on the first private network information of the terminal device, control the transceiver 1401 to obtain the first private network information from a private network server.

For example, when a private network type is a CAG, the processor 1402 is further configured to: obtain an updated CAG identifier list based on the first private network information; and control the transceiver 1401 to send the updated CAG identifier list to an access and mobility management network element.

In an optional implementation, the processor 1402 is further configured to: after controlling the transceiver 1401 to send the first updated network configuration information to the terminal device, control the transceiver 1401 to send the operation mode of the terminal device to a policy control network element.

Specifically, the first private network information includes at least one of the following: a private network service type and the subscription information that is of the terminal device.

For example, the operation mode is a mode in which the terminal device accesses a private network, a mode in which the terminal device accesses a public network, or a mode in which the terminal device accesses both a private network and a public network.

In another embodiment, when the unified data management network element is configured to implement the information configuration method shown in FIG. 3, the unified data management network element may specifically include:
the transceiver 1401, configured to send and receive data; and
the processor 1402, configured to: control the transceiver 1401 to receive an operation mode of a terminal device from an access and mobility management network element; and
control the transceiver 1401 to send third updated network configuration information to the access and mobility management network element, where the third updated network configuration information includes the operation mode and subscription information.

In an implementation, the processor 1402 is further configured to control the transceiver 1401 to obtain fourth private network information from a private network server.

In an optional implementation, the processor 1402 is further configured to: after controlling the transceiver 1401 to obtain the fourth private network information from the private network server, control the transceiver 1401 to send first event subscription information to the access and mobility management network element, where the first event subscription information includes third private network information and a triggering condition for updating subscription information of the terminal device.

In an example, the fourth private network information includes the subscription information of the terminal device and the triggering condition for updating the subscription information of the terminal device.

In another example, the fourth private network information includes the subscription information of the terminal device.

In an implementation, when a private network type is a CAG, the processor 1402 is further configured to: obtain an updated CAG identifier list based on the fourth private network information; and control the transceiver 1401 to send the updated CAG identifier list to the access and mobility management network element.

Based on the foregoing embodiments, an embodiment of this application further provides a policy control network element, configured to implement the information configuration method. With reference to FIG. 15, the policy control network element 1500 may include a transceiver 1501 and a processor 1502. Optionally, the policy control network element 1500 may further include a memory 1503. The memory 1503 may be disposed inside the policy control network element 1500, or may be disposed outside the policy control network element 1500. The processor 1502 controls the transceiver 1501 to send and receive data, and is configured to implement the method performed by the policy control network element (for example, the PCF) in FIG. 2 to FIG. 9B.

Specifically, the processor 1502 may be a CPU, an NP, or a combination of a CPU and an NP. The processor 1502 may further include a hardware chip. The hardware chip may be an ASIC, a PLD, or a combination thereof. The PLD may be a CPLD, an FPGA, GAL, or any combination thereof.

The transceiver 1501, the processor 1502, and the memory 1503 are connected to each other. Optionally, the transceiver 1501, the processor 1502, and the memory 1503 are connected to each other through a bus 1504. The bus 1504 may be a PCI bus, an EISA bus, or the like. The bus may be classified into an address bus, a data bus, a control bus, and the like. For ease of representation, only one thick line is used to represent the bus in FIG. 15, but this does not mean that there is only one bus or only one type of bus.

In an optional implementation, the memory 1503 is configured to store a program and the like. Specifically, the program may include program code, and the program code includes computer operation instructions. The memory 1503 may include a RAM, and may further include a non-volatile memory (non-volatile memory), for example, one or more magnetic disk memories. The processor 1502 executes the application program stored in the memory 1503 to implement the foregoing function, to implement the information configuration method provided in the embodiments of this application.

In an embodiment, when the policy control network element is configured to implement the information configuration method shown in FIG. 2, the policy control network element may specifically include:
the transceiver 1501, configured to send and receive data; and
the processor 1502, configured to: control the transceiver 1501 to obtain second private network information from a private network server, where the second private network information includes first policy information;
control the transceiver 1501 to receive an operation mode of a terminal device from a unified data management network element;
determine second policy information based on the first policy information and the operation mode; and
control the transceiver 1501 to send second updated network configuration information to the terminal device, where the second updated network configuration information includes the second policy information, and the second policy information is related to the operation mode.

For example, the second updated network configuration information further includes at least one of the following: a private network service type and the operation mode that is of the terminal device.

Specifically, the first policy information includes a network selection policy and a routing policy.

In another embodiment, when the policy control network element is configured to implement the information configuration method shown in FIG. 3, the policy control network element may specifically include:
the transceiver 1501, configured to send and receive data; and
the processor 1502, configured to: control the transceiver 1501 to obtain fifth private network information from a private network server, where the fifth private network information includes third policy information;
control the transceiver 1501 to receive an operation mode of a terminal device from an access and mobility management network element;
determine fourth policy information based on the third policy information and the operation mode; and
control the transceiver 1501 to send fourth updated network configuration information to the terminal device, where the fourth updated network configuration information includes the fourth policy information, and the fourth policy information is related to the operation mode.

Specifically, the fourth updated network configuration information further includes at least one of the following: a private network service type and the operation mode that is of the terminal device.

For example, the third policy information includes a private network selection policy and a routing policy.

In a possible implementation, the fifth private network information further includes a triggering condition for updating policy information of the terminal device.

In an optional implementation, the processor 1502 is further configured to: before the operation mode of the terminal device is received from the access and mobility management network element, control the transceiver 1501 to send second event subscription information to the access and mobility management network element, where the second event subscription information includes the triggering condition for updating the policy information of the terminal device.

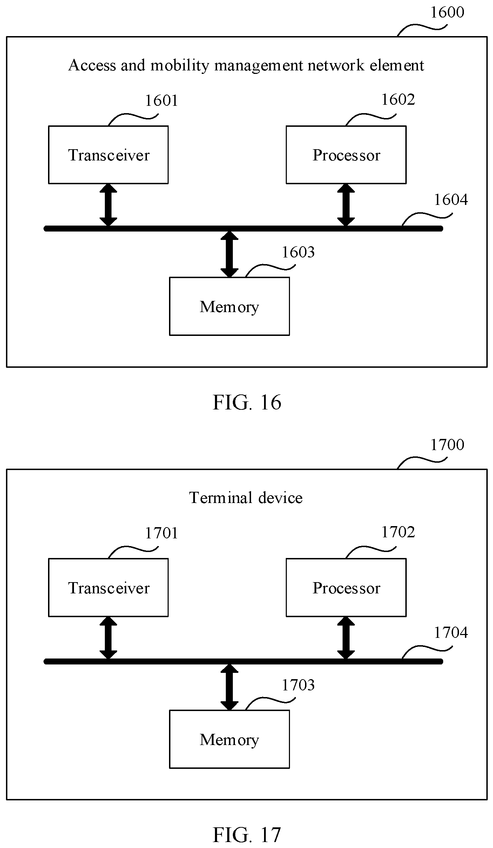

Based on the foregoing embodiments, an embodiment of this application further provides an access and mobility management network element, configured to implement the information configuration method. With reference to FIG. 16, the policy control network element 1600 may include a transceiver 1601 and a processor 1602. Optionally, the policy control network element 1600 may further include a memory 1603. The memory 1603 may be disposed inside the policy control network element 1600, or may be disposed outside the policy control network element 1600. The processor 1602 controls the transceiver 1601 to send and receive data, and is configured to implement the method performed by the access and mobility management network element (for example, the AMF) in FIG. 3 to FIG. 9B.

Specifically, the processor 1602 may be a CPU, an NP, or a combination of a CPU and an NP. The processor 1602 may further include a hardware chip. The hardware chip may be an ASIC, a PLD, or a combination thereof. The PLD may be a CPLD, an FPGA, GAL, or any combination thereof.

The transceiver 1601, the processor 1602, and the memory 1603 are connected to each other. Optionally, the transceiver 1601, the processor 1602, and the memory 1603 are connected to each other through a bus 1604. The bus 1604 may be a PCI bus, an EISA bus, or the like. The bus may be classified into an address bus, a data bus, a control bus, and the like. For ease of representation, only one thick line is used to represent the bus in FIG. 16, but this does not mean that there is only one bus or only one type of bus.

In an optional implementation, the memory 1603 is configured to store a program and the like. Specifically, the program may include program code, and the program code includes computer operation instructions. The memory 1603 may include a RAM, and may further include a non-volatile memory (non-volatile memory), for example, one or more magnetic disk memories. The processor 1602 executes the application program stored in the memory 1603 to implement the foregoing function, to implement the information configuration method provided in the embodiments of this application.

In an embodiment, when the policy control network element is configured to implement the information configuration method shown in FIG. 3, the policy control network element may specifically include:
the transceiver 1601, configured to send and receive data; and
the processor 1602, configured to: determine an operation mode of a terminal device based on third private network information of the terminal device;
control the transceiver 1601 to send the operation mode to a unified data management network element;
control the transceiver 1601 to receive third updated network configuration information from the unified data management network element, where the third updated network configuration information includes the operation mode and subscription information; and
control the transceiver 1601 to send the third updated network configuration information to the terminal device.

In an optional implementation, the processor 1602 is further configured to: before determining the operation mode of the terminal device based on the third private network information of the terminal device, determine that the terminal device meets a configuration update condition, where the configuration update condition includes a triggering condition for triggering area information and/or time period information by the terminal device.

For example, the processor 1602 is further configured to: before determining that the terminal device meets the configuration update condition, control the transceiver 1601 to receive first event subscription information from the unified data management network element, where the event subscription information includes the third private network information and a triggering condition for updating subscription information of the terminal device.

For example, the processor 1602 is further configured to: before determining that the terminal device meets the configuration update condition, control the transceiver 1601 to receive second event subscription information from a policy control network element, where the second event subscription information includes a triggering condition for updating policy information of the terminal device.

In a possible implementation, the processor 1602 is further configured to: before determining the operation mode of the terminal device, control the transceiver 1601 to receive a configuration update request from the terminal device, where the configuration update request includes an identifier of a private network; and query the unified data management network element for the subscription information of the terminal device based on the identifier of the private network, and determine that the terminal device can access the private network.

In a manner, the processor 1602 is further configured to control the transceiver 1601 to send the operation mode of the terminal device to the policy control network element.

Specifically, when a private network type is a CAG, the processor 1602 is further configured to control the transceiver 1601 to receive an updated CAG identifier list from the unified data management network element.

For example, the third private network information includes a private network service type.

Specifically, the operation mode is a mode in which the terminal device accesses a private network, a mode in which the terminal device accesses a public network, or a mode in which the terminal device accesses both a private network and a public network.

Based on the foregoing embodiments, an embodiment of this application further provides a terminal device, configured to implement the information configuration method. With reference to FIG. 17, the terminal device 1700 may include a transceiver 1701 and a processor 1702. Optionally, the terminal device 1700 may further include a memory 1703. The memory 1703 may be disposed inside the terminal device 1700, or may be disposed outside the terminal device 1700. The processor 1702 controls the transceiver 1701 to send and receive data, and is configured to implement the method performed by the terminal device (for example, the UE) in FIG. 2 to FIG. 9B.

Specifically, the processor 1702 may be a CPU, an NP, or a combination of a CPU and an NP. The processor 1702 may further include a hardware chip. The hardware chip may be an ASIC, a PLD, or a combination thereof. The PLD may be a CPLD, an FPGA, GAL, or any combination thereof.

The transceiver 1701, the processor 1702, and the memory 1703 are connected to each other. Optionally, the transceiver 1701, the processor 1702, and the memory 1703 are connected to each other through a bus 1704. The bus 1704 may be a PCI bus, an EISA bus, or the like. The bus may be classified into an address bus, a data bus, a control bus, and the like. For ease of representation, only one thick line is used to represent the bus in FIG. 17, but this does not mean that there is only one bus or only one type of bus.

In an optional implementation, the memory 1703 is configured to store a program and the like. Specifically, the program may include program code, and the program code includes computer operation instructions. The memory 1703 may include a RAM, and may further include a non-volatile memory (non-volatile memory), for example, one or more magnetic disk memories. The processor 1702 executes the application program stored in the memory 1703 to implement the foregoing function, to implement the information configuration method provided in the embodiments of this application.

In an embodiment, when the terminal device is configured to implement the information configuration method shown in FIG. 2, the terminal device may specifically include:
the transceiver 1701, configured to send and receive data; and
the processor 1702, configured to: control the transceiver 1701 to obtain updated network configuration information; and
access a private network based on the updated network configuration information, and route application traffic based on the updated network configuration information.

In an optional implementation, when controlling the transceiver 1701 to obtain the updated network configuration information, the processor 1702 is specifically configured to:
control the transceiver 1701 to receive first updated network configuration information from a unified data management network element, where the first updated network configuration information includes an operation mode of the terminal device and subscription information of the terminal device.

In another optional implementation, when controlling the transceiver 1701 to obtain the updated network configuration information, the processor 1702 is specifically configured to:
receive second updated network configuration information from a policy control network element, where the second updated network configuration information includes second policy information, and the second policy information is related to an operation mode of the terminal device.

For example, the processor 1702 is further configured to: before controlling the transceiver 1701 to obtain the updated network configuration information, control the transceiver 1701 to send a private network service request to a private network server by using a private network application.

In another embodiment, when the terminal device is configured to implement the information configuration method shown in FIG. 3, the terminal device may specifically include:
the transceiver 1701, configured to send and receive data; and
the processor 1702, configured to: control the transceiver 1701 to obtain updated network configuration information; and
access a private network based on the updated network configuration information, and route application traffic based on the updated network configuration information.

In an optional implementation, when controlling the transceiver 1701 to obtain the updated network configuration information, the processor 1702 is specifically configured to:
control the transceiver 1701 to receive third updated network configuration information from an access and mobility management network element, where the third updated network configuration information includes an operation mode of the terminal device and subscription information of the terminal device.

In another optional implementation, when controlling the transceiver 1701 to obtain the updated network configuration information, the processor 1702 is specifically configured to:
control the transceiver 1701 to receive fourth updated network configuration information from a policy control network element, where the fourth updated network configuration information includes fourth policy information, and the fourth policy information is related to an operation mode of the terminal device.

Specifically, the processor 1702 is further configured to: before controlling the transceiver 1701 to obtain the updated network configuration information, control the transceiver 1701 to send a configuration update request to the access and mobility management network element, where the configuration update request includes an identifier of the private network.

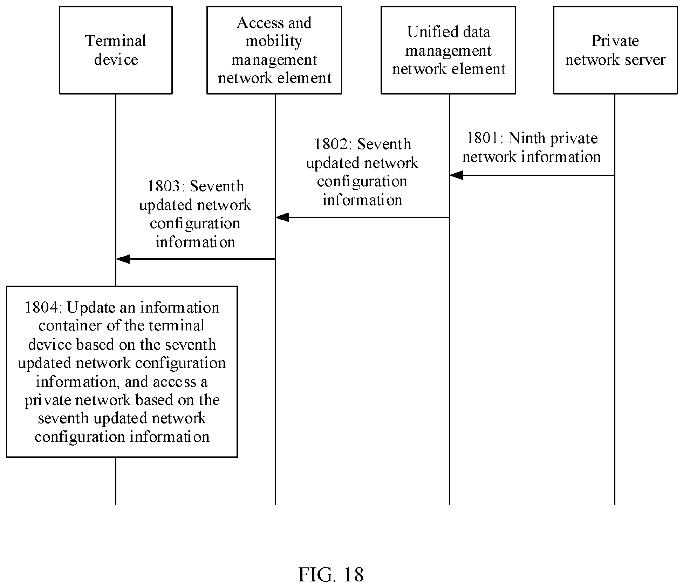

Another information configuration method provided in an embodiment of this application is applicable to the communication system shown in FIG. 1. In this embodiment, it is considered by default that when an updated network configuration is obtained, a terminal device accesses only a private network. With reference to FIG. 18, a specific procedure of the method includes the following steps.

Step 1801: A unified data management network element obtains ninth private network information from a private network server.

Specifically, the private network server may be a positioning server (provisioning server, PS).

In an optional implementation, the unified data management network element needs to obtain the ninth private network information from the private network server through a network exposure function network element. Specifically, the private network server first sends, to the network exposure function network element, private network configuration information of the UE that needs to be updated, where the private network configuration information of the UE that needs to be updated includes the ninth private network information, then, the network exposure function network element sends the ninth private network information to the unified data management network element.

For example, the private network server may send, to the network exposure function network element by using a first onboarding request (Onboarding Request), the private network configuration information of the UE that needs to be updated; then, the network exposure function network element sends the ninth private network information to the unified data management network element by using a second onboarding request (Onboarding Request). The first onboarding request and the second onboarding request further include a generic public subscription identifier (generic public subscription identifier, GPSI) of the target terminal device.

Specifically, the ninth private network information includes an information container, for example, an onboarding information management container (onboarding information container, OIC).

In an optional implementation, the ninth private network information further includes at least one of the following: a triggering condition for updating a management information container of the terminal device, an update type, and a private network type. The update type is used to indicate to update the OIC immediately or on demand.

For example, content included in the information container varies based on different private network types. Specifically, when the private network type is a standalone private network (standalone NPN, SNPN), the information container includes subscription information and/or credential information that are/is used for primary authentication or authorization; or when the private network type is a public network integrated private network (public network integrated-NPN, PNI-NPN), the information container includes a configuration parameter of the terminal device and/or credential information used for external entity authentication, and the configuration parameter of the terminal device includes a CAG identifier list and PDU session information.

The credential information used for external entity authentication may be considered as credential information used for external authentication, and may be specifically used by an external entity, for example, for a secondary authentication (Secondary Authentication) procedure.

The CAG identifier list and the PDU session information may be sent for the first time, that is, newly established, or may be updated information. For example, the PDU session information may be single network slice selection assistance information (single network slice selection assistance information, SNSSAI), a DNN, a UE route selection policy (UE Route Selection Policy, URSP), and a QoS rule (rule).

In an optional implementation, when the ninth private network information does not include the private network type, an operator and a third party may agree on a specific private network type, and the operator updates the information container of the terminal device for the specific private network type.

Step 1802: The unified data management network element sends seventh updated network configuration information to an access and mobility management network element based on the ninth private network information, where the seventh updated network configuration information includes the information container.

In an optional implementation, when the private network type is the SNPN, when receiving the second onboarding request, the unified data management network element does not perceive specific content in the OIC, and needs to transparently transmit the OIC to the target UE. That is, when the private network type is the SNPN, the unified data management network element sends the seventh updated network configuration information to the access and mobility management network element in a transparent transmission manner, so that the access and mobility management network element transparently transmits the seventh updated network configuration information to the terminal device.

In another optional implementation, when the private network type is the PNI-NPN, the unified data management network element needs to update subscription information and/or configuration information of the terminal device based on specific content in the OIC (for example, a new/an updated allowed CAG list and new/updated PDU session information). That is, when the private network type is the PNI-NPN, the unified data management network element updates the subscription information and/or the configuration information of the terminal device based on the management information container, where the management information container in the seventh updated network configuration information includes the updated subscription information and/or updated configuration information.

Step 1803: The access and mobility management network element sends the seventh updated network configuration information to the terminal device.

In an optional implementation, when the ninth private network information does not include the update type or the triggering condition for updating the information container of the terminal device, or when the ninth private network information includes the update type and the update type is immediate update, step 1802 and step 1803 may be directly performed.

In another optional implementation, when the ninth private network information includes the triggering condition for updating the information container of the terminal device and the included update type is on-demand update, after obtaining the ninth private network information from the private network server, the unified data management network element stores the information container, and sends third event subscription information to the access and mobility management network element, where the third event subscription information includes the triggering condition for updating the information container of the terminal device. Further, before sending the seventh updated network configuration information to the terminal device, the access and mobility management network element determines that the terminal device meets a configuration update condition, where the configuration update condition includes a triggering condition for triggering area information and/or time period information by the terminal device.

Based on the descriptions of step 1802, when the private network type is the SNPN, that the access and mobility management network element sends the seventh updated network configuration information to the terminal device may be specifically that the mobility management network element transparently transmits the seventh updated network configuration information to the terminal device.

Step 1804: The terminal device updates the information container of the terminal device based on the seventh updated network configuration information, and accesses a private network based on the seventh updated network configuration information.

In a specific implementation, when the private network type is the SNPN, the terminal device selects an SNPN private network and performs cell selection based on the subscription information and/or the credential information that are/is used for primary authentication or authorization and that are/is included in the information container, and then the terminal device performs primary authorization in the SNPN private network.

In another specific implementation, when the private network type is the PNI-NPN, the terminal device performs CAG cell selection or slice selection, and performs, when establishing a session, secondary authorization based on the credential information that is in the information container and that is used for external entity authentication.

According to the information configuration method provided in this embodiment of this application, private network configuration information may be flexibly updated through a public network.

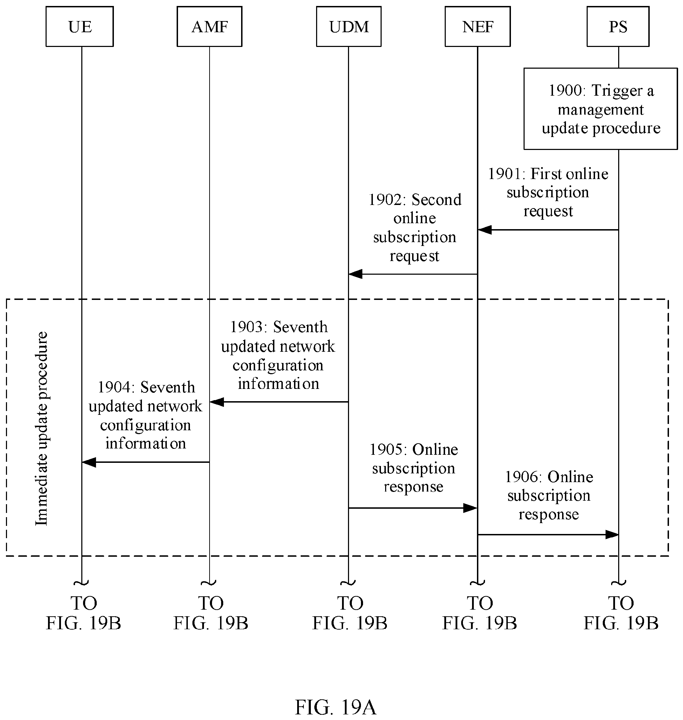

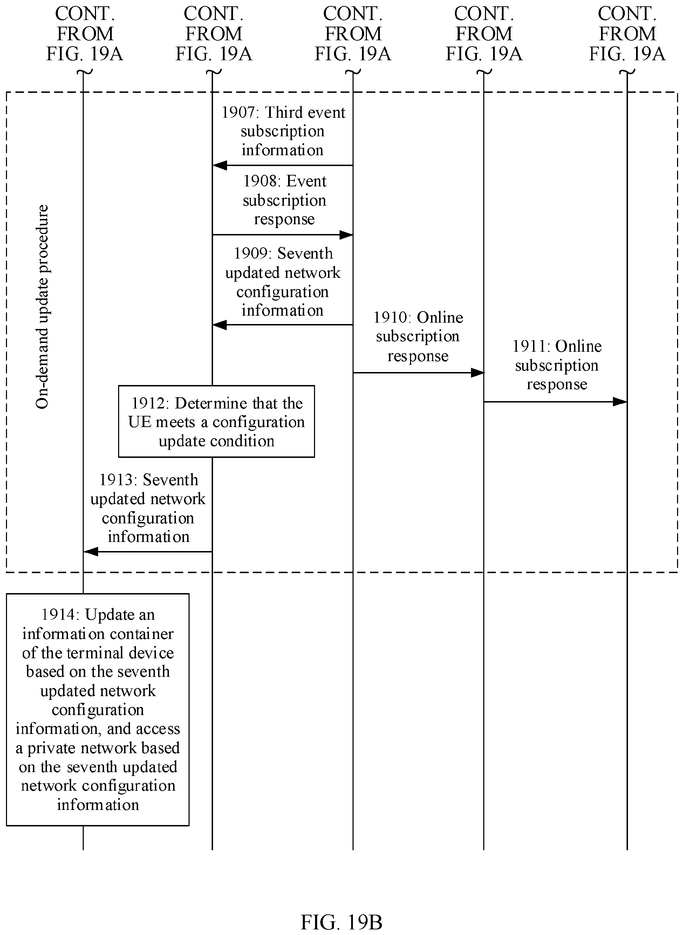

Based on the foregoing embodiment, FIG. 19A and FIG. 19B show a specific example of an information configuration method. In this example, an example in which a private network server is a PS, a unified data management network element is a UDM, an access and mobility management network element is an AMF, a terminal device is UE, and an information container is an OIC is used for description. In this example, during configuration update, it is considered by default that a terminal device can access only a private network. Specifically, a procedure of this example may include the following steps.

Step 1900: A PS triggers a management update procedure.

Specifically, in some scenarios, the PS may trigger a management (onboarding) update procedure. For example, an owner of a terminal device purchases a concert ticket from a ticketing server through a cellular network or a Wi-Fi network by using an application of the terminal device, and the ticketing server may uniquely identify the terminal device based on a phone number/GPSI and generate a corresponding OIC. Different private network types may correspond to different OICs. For a private network of an SNPN type, the OIC includes subscription information and/or credential information that are/is used for primary authentication/authorization. For a private network of a PNI-NPN type, the OIC may include some configuration parameters of the UE (for example, a newly established/an updated allowed (allowed) CAG list and a newly established/an updated PDU session parameter) and/or credential information used for external entity authentication.

In an example, the PS may obtain the OIC and other necessary parameters from the ticketing server based on an agreement between the PS and the ticketing server (where for example, the necessary parameters may include a private network type that is used to indicate the SNPN type or the PNI-NPN type, and an update type that is used to indicate to update an OIC immediately or on demand). Optionally, when the ticketing server is the PS, no additional agreement or communication is introduced.

Step 1901: The PS sends a first onboarding request to a NEF. The first onboarding request carries one or more parameters: an identifier GPSI of the target UE, an OIC, a private network type, an update type, and a triggering event (a triggering condition for updating an information container of the terminal device). The triggering event indicates when and where to send the OIC to the target UE for update.

Step 1902: The NEF sends a second onboarding request to a UDM. The second onboarding request includes ninth private network information.

Specifically, the NEF performs internal and external information processing/conversion (for example, converting the GPSI into an SUPI) for the first onboarding request, to obtain the second onboarding request.

Optionally, if the second onboarding request includes the update type and/or the triggering event (the triggering condition for updating the information container of the terminal device), or if the second onboarding request does not indicate the triggering event or the update type or only indicates that the update type is immediate update, an immediate update procedure in step 1903 to step 1906 is performed, if the second onboarding request includes the triggering condition for updating the information container of the terminal device and the update type is on-demand update, an on-demand update procedure in step 1907 to step 1913 is performed, so that the OIC is sent to the UE for update.

The immediate update procedure in step 1903 to step 1906 is as follows:
Step 1903: The UDM sends seventh updated network configuration information to an AMF based on the ninth private network information included in the second onboarding request, where the seventh updated network configuration information includes the information container.
Step 1904: The AMF sends the seventh updated network configuration information to the UE.
Step 1905: The UDM sends an onboarding response to the NEF.
Step 1906: The NEF forwards the onboarding response to the PS.

The on-demand update procedure in step 1907 to step 1913 is as follows:
Step 1907: The UDM stores the OIC in the second onboarding request, and sends third event subscription information to the AMF based on the triggering condition in the second onboarding request, where the third event subscription information includes the triggering condition for updating the information container of the terminal device.
Step 1908: The AMF sends an event subscription response to the UDM.
Step 1909: The UDM sends seventh updated network configuration information to the AMF, where the seventh updated network configuration information includes the information container.
Step 1910: The UDM sends an onboarding response to the NEF.
Step 1911: The NEF forwards the onboarding response to the PS.
Step 1912: The AMF determines that the UE meets a configuration update condition, where the configuration update condition includes a triggering condition for triggering area information and/or time period information by the terminal device.
Step 1913: The AMF sends the seventh updated network configuration information to the UE.

Specifically, if the private network type carried in the second onboarding request indicates the SNPN type, the UDM cannot perceive specific content in the OIC, and needs to transparently transmit the OIC to the target UE, that is, processes of the foregoing steps 1903 and 1904 or the steps 1909 and 1913 are performed in a transparent transmission manner. If the private network type indicates the PNI-NPN type, the UDM needs to update subscription information and/or configuration information of the target UE based on specific content in the OIC (for example, a new/an updated allowed CAG list and new/updated PDU session parameter). In this case, the seventh updated network configuration information includes updated subscription information and/or updated configuration information.

Step 1914: The UE updates the information container of the terminal device based on the seventh updated network configuration information, and accesses a private network based on the seventh updated network configuration information.

Specifically, in an SNPN scenario, the UE selects an SNPN based on subscription information and/or credential information carried in the OIC, and then performs primary authorization in the SNPN network. In a PNI-NPN scenario, the UE may perform CAG cell selection or slice selection, and perform, when subsequently establishing a session, secondary authorization based on credential information that is in the OIC and that is used for external entity authentication.

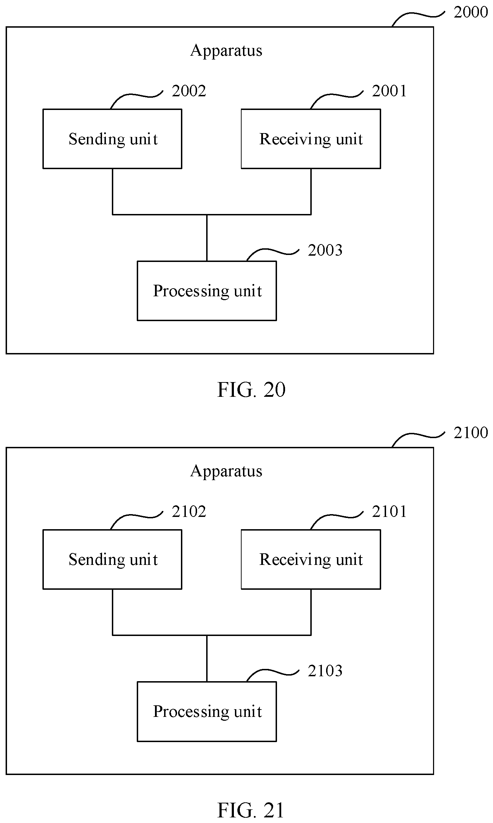

Based on an inventive concept the same as that of the method embodiments, an embodiment of this application further provides an apparatus. The apparatus is used in a unified data management network element. The apparatus may be specifically a processor, a chip or a chip system, a function module, or the like in the unified data management. With reference to FIG. 20, the apparatus 2000 may include a receiving unit 2001 and a sending unit 2002. Optionally, the apparatus may further include a processing unit 2003. The receiving unit 2001 is used by the apparatus 2000 to receive information, the sending unit 2002 is used by the apparatus 2000 to send information, and the processing unit 2003 is configured to control and manage an action of the apparatus 2000. The processing unit 2003 may be further configured to indicate a processing process related to the unified data management network element (for example, the UDM) in the embodiment shown in FIG. 18 or in FIG. 19A and FIG. 19B and/or another process of the technical solutions described in this application. Specifically, the processing unit 2003 may control the receiving unit 2001 and control steps performed by the sending unit 2002. For details, refer to the embodiment shown in FIG. 18 or in FIG. 19A and FIG. 19B. Repeated parts are not described herein again.

When being implemented by hardware, the processing unit 2003 may be a processor, a processing circuit, or the like; the sending unit 2002 may be a transmitter, a transmitter circuit, or the like; the receiving unit 2001 may be a receiver, a receiver circuit, or the like. The sending unit 2002 and the receiving unit 2001 may constitute a transceiver.

Based on an inventive concept the same as that of the method embodiments, an embodiment of this application further provides an apparatus. The apparatus is used in an access and mobility management network element. The apparatus may be specifically a processor, a chip or a chip system, a function module, or the like in the access and mobility management network element. With reference to FIG. 21, the apparatus 2100 may include a receiving unit 2101 and a sending unit 2102. Optionally, the apparatus may further include a processing unit 2103. The receiving unit 2101 is used by the apparatus 2100 to receive information, the sending unit 2102 is used by the apparatus 2100 to send information, and the processing unit 2103 is configured to control and manage an action of the apparatus 2100. The processing unit 2103 may be further configured to indicate a processing process related to the access and mobility management network element (for example, the AMF) in the embodiment shown in FIG. 18 or in FIG. 19A and FIG. 19B and/or another process of the technical solutions described in this application. Specifically, the processing unit 2103 may control the receiving unit 2101 and control steps performed by the sending unit 2102. For details, refer to the embodiment shown in FIG. 18 or in FIG. 19A and FIG. 19B. Repeated parts are not described herein again.

When being implemented by hardware, the processing unit 2103 may be a processor, a processing circuit, or the like; the sending unit 2102 may be a transmitter, a transmitter circuit, or the like; the receiving unit 2101 may be a receiver, a receiver circuit, or the like. The sending unit 2102 and the receiving unit 2101 may constitute a transceiver.

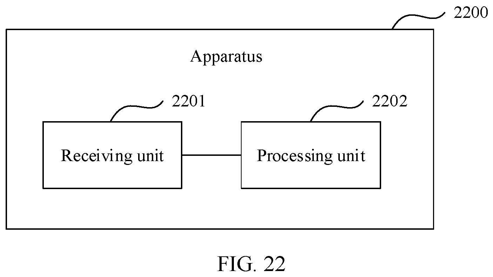

Based on an inventive concept the same as that of the method embodiments, an embodiment of this application further provides an apparatus. The apparatus is used in a terminal device. The apparatus may be specifically a processor, a chip or a chip system, a function module, or the like in the terminal device. With reference to FIG. 22, the apparatus 2200 may include a receiving unit 2201 and a processing unit 2202. The receiving unit 2201 is used by the apparatus 2200 to receive information, and the processing unit 2202 is configured to control and manage an action of the apparatus 2200. The processing unit 2202 may be further configured to indicate a processing process related to the terminal device in the embodiment shown in FIG. 18 or in FIG. 19A and FIG. 19B and/or another process of the technical solutions described in this application. Specifically, the processing unit 2202 may control steps performed by the receiving unit 2201. For details, refer to the embodiment shown in FIG. 18 or in FIG. 19A and FIG. 19B. Repeated parts are not described herein again.

When being implemented by hardware, the processing unit 2202 may be a processor, a processing circuit, or the like; the receiving unit 2201 may be a receiver, a receiver circuit, or the like.

In an embodiment, the unified data management network element shown in FIG. 14 is further configured to implement an operation performed by the unified data management network element in the information configuration method shown in FIG. 18. The transceiver 1401 is configured to communicate and interact with another device or network element connected to the unified data management network element, that is, configured to send and receive data, for example, obtain ninth private network information from a private network server, and send seventh updated network configuration information to an access and mobility management network element based on the ninth private network information, where the seventh updated network configuration information includes an information container. The processor 1402 is configured to perform another operation or function performed by the unified data management network element. For details, refer to the operations in the embodiment shown in FIG. 18. Details are not described herein again.

In an embodiment, the access and mobility management network element shown in FIG. 16 is further configured to implement an operation performed by the access and mobility management network element in the information configuration method shown in FIG. 18. The transceiver 1601 is configured to communicate and interact with another device or network element connected to the access and mobility management network element, that is, configured to send and receive data, for example, receive seventh updated network configuration information from a unified data management network element, and send the seventh updated network configuration information to a terminal device, where the seventh updated network configuration information includes an information container. The processor 1602 is configured to perform another operation or function performed by the access and mobility management network element. For details, refer to the operations in the embodiment shown in FIG. 18. Details are not described herein again.

In an embodiment, the terminal device shown in FIG. 17 is further configured to implement an operation performed by the terminal device in the information configuration method shown in FIG. 18. The transceiver 1701 is configured to communicate and interact with another device or network element connected to the terminal device, that is, configured to send and receive data, for example, receive seventh updated network configuration information from an access and mobility management network element, where the seventh updated network configuration information includes an information container. The processor 1702 is configured to perform another operation or function performed by the terminal device, for example, update an information container of the terminal device based on the seventh updated network configuration information, and access a private network based on the seventh updated network configuration information. For details, refer to the operations in the embodiment shown in FIG. 18. Details are not described herein again.

Based on the foregoing embodiments, an embodiment of this application further provides a computer storage medium. The storage medium stores a software program, and when the software program is read and executed by one or more processors, the method provided in any one or more of the foregoing embodiments may be implemented. The computer storage medium may include any medium that can store program code, such as a USB flash drive, a removable hard disk, a read-only memory, a random access memory, a magnetic disk, or an optical disc.

Based on the foregoing embodiments, an embodiment of this application further provides a chip. The chip includes a processor, configured to implement a function in any one or more of the foregoing embodiments, for example, obtain or process information or a message in the foregoing methods. Optionally, the chip further includes a memory, and the memory is configured to store program instructions and data that are necessary and executed by the processor. The chip may include a chip, or may include a chip and another discrete component.

A person skilled in the art should understand that the embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specified function in one or more processes in the flowcharts and/or in one or more blocks in the block diagrams.

## Claims

1. An information configuration method, comprising:
determining (S303), by an access and mobility management network element of a public network, an operation mode of a terminal device based on third private network information of the terminal device, wherein the public network received configuration information from a private network server of a private network in advance, the private network server being subscribed to a configuration update event, or a terminal device actively requested the private network configuration information, the private network being a standalone non-public network, NPN, or a closed access group, CAG, network;
sending (S304), by the access and mobility management network element, the operation mode to a unified data management network element of a public network;
receiving (S305), by the access and mobility management network element, third updated network configuration information from the unified data management network element, wherein the third updated network configuration information comprises the operation mode and subscription information; and
sending (S306), by the access and mobility management network element, the third updated network configuration information to the terminal device.

2. The method according to claim 1, wherein before the determining (S303), by an access and mobility management network element, an operation mode of a terminal device based on third private network information of the terminal device, the method further comprises:
determining, by the access and mobility management network element, that the terminal device meets a configuration update condition, wherein the configuration update condition comprises a triggering condition for triggering area information and/or time period information by the terminal device.

3. The method according to claim 2, wherein before the determining, by the access and mobility management network element, that the terminal device meets a configuration update condition, the method further comprises:
receiving, by the access and mobility management network element, first event subscription information from the unified data management network element, wherein the first event subscription information comprises the third private network information and a triggering condition for updating subscription information of the terminal device.

4. The method according to claim 2, wherein before the determining, by the access and mobility management network element, that the terminal device meets a configuration update condition, the method further comprises:
receiving, by the access and mobility management network element, second event subscription information from a policy control network element, wherein the second event subscription information comprises a triggering condition for updating policy information of the terminal device.

5. The method according to claim 1, wherein before the determining, by an access and mobility management network element, an operation mode of a terminal device based on third private network information of the terminal device, the method further comprises:
receiving (S305), by the access and mobility management network element, a configuration update request from the terminal device, wherein the configuration update request comprises an identifier of a private network; and
querying, by the access and mobility management network element, the unified data management network element for the subscription information of the terminal device based on the identifier of the private network, and determining that the terminal device can access the private network.

6. The method according to claim 4, wherein the method further comprises:
sending (S306), by the access and mobility management network element, the operation mode of the terminal device to the policy control network element.

7. An information configuration method, comprising:
obtaining (S306), by a terminal device, updated network configuration information from an access and mobility management network element of a public network, wherein the public network received configuration information from a private network server of a private network in advance, the private network server being subscribed to a configuration update event, or the terminal device actively requested the private network configuration information, the private network being a standalone non-public network, NPN, or a closed access group, CAG, network; and
accessing (S310), by the terminal device, the private network based on the updated network configuration information, and routing application traffic based on the updated network configuration information.

8. The method according to claim 7, wherein the obtaining (S306), by a terminal device, updated network configuration information comprises:
receiving, by the terminal device, third updated network configuration information from an access and mobility management network element, wherein the third updated network configuration information comprises an operation mode of the terminal device and subscription information of the terminal device.

9. The method according to claim 8, wherein the obtaining, by a terminal device, updated network configuration information further comprises:
receiving, by the terminal device, fourth updated network configuration information from a policy control network element, wherein the fourth updated network configuration information comprises fourth policy information, and the fourth policy information is related to the operation mode of the terminal device.

10. The method according to claim 7, wherein before the obtaining, by a terminal device, updated network configuration information, the method further comprises:
sending, by the terminal device, a configuration update request to the access and mobility management network element, wherein the configuration update request comprises an identifier of the private network.

11. An access and mobility management network element of a public network, comprising:
means for carrying out the steps of the method according to any one of claims 1-6.

12. A terminal device, comprising:
a processor; and
a computer readable storage medium storing programming for execution by the processor, the programming including instructions to:
obtain updated network configuration information from an access and mobility management network element of a public network wherein the public network received configuration information from a private network server of a private network in advance, the private network server being subscribed to a configuration update event, or the terminal device actively requested the private network configuration information, the private network being a standalone non-public network, NPN, or a closed access group, CAG, network; and
access the private network based on the updated network configuration information, and routing application traffic based on the updated network configuration information.

13. The terminal device according to claim 12, wherein the programming includes instructions to:
receive third updated network configuration information from an access and mobility management network element, wherein the third updated network configuration information comprises an operation mode of the terminal device and subscription information of the terminal device.

14. The terminal device according to claim 13, wherein the programming further includes instructions to:
receive fourth updated network configuration information from a policy control network element, wherein the fourth updated network configuration information comprises fourth policy information, and the fourth policy information is related to the operation mode of the terminal device.

15. The terminal device according to claim 13, wherein the programming further includes instructions to:
send a configuration update request to the access and mobility management network element, wherein the configuration update request comprises an identifier of the private network.

## Patentansprüche

1. Informationskonfigurationsverfahren, umfassend:
Bestimmen (S303), durch ein Zugriffs- und Mobilitätsmanagement-Netzelement eines öffentlichen Netzes, eines Betriebsmodus einer Endgerätevorrichtung basierend auf dritten privaten Netzinformationen der Endgerätevorrichtung, wobei das öffentliche Netz im Voraus Konfigurationsinformationen von einem privaten Netzserver eines privaten Netzes empfangen hat, der private Netzserver für ein Konfigurationsaktualisierungsereignis abonniert ist oder eine Endgerätevorrichtung die privaten Netzkonfigurationsinformationen aktiv angefordert hat, wobei es sich bei dem privaten Netz um ein eigenständiges nicht-öffentliches Netz, NPN, oder ein Netz einer geschlossenen Zugriffsgruppe, CAG, handelt;
Senden (S304), durch das Zugriffs- und Mobilitätsmanagement-Netzelement, des Betriebsmodus an ein einheitliches Datenmanagement-Netzelement eines öffentlichen Netzes;
Empfangen (S305), durch das Zugriffs- und Mobilitätsmanagement-Netzelement, von dritten aktualisierten Netzkonfigurationsinformationen von dem einheitlichen Datenmanagement-Netzelement, wobei die dritten aktualisierten Netzkonfigurationsinformationen den Betriebsmodus und Abonnementinformationen umfassen; und
Senden (S306), durch das Zugriffs- und Mobilitätsmanagement-Netzelement, der dritten aktualisierten Netzkonfigurationsinformationen an die Endgerätevorrichtung.

2. Verfahren nach Anspruch 1, wobei das Verfahren vor dem Bestimmen (S303), durch ein Zugriffs- und Mobilitätsmanagement-Netzelement, eines Betriebsmodus einer Endgerätevorrichtung basierend auf dritten privaten Netzinformationen der Endgerätevorrichtung ferner Folgendes umfasst:
Bestimmen, durch das Zugriffs- und Mobilitätsmanagement-Netzelement, dass die Endgerätevorrichtung eine Konfigurationsaktualisierungsbedingung erfüllt, wobei die Konfigurationsaktualisierungsbedingung eine Auslösebedingung zum Auslösen von Bereichsinformationen und/oder Zeitrauminformationen durch die Endgerätevorrichtung umfasst.

3. Verfahren nach Anspruch 2, wobei das Verfahren vor dem Bestimmen, durch das Zugriffs- und Mobilitätsmanagement-Netzelement, dass die Endgerätevorrichtung eine Konfigurationsaktualisierungsbedingung erfüllt, ferner Folgendes umfasst:
Empfangen, durch das Zugriffs- und Mobilitätsmanagement-Netzelement, von ersten Ereignisabonnementinformationen von dem einheitlichen Datenmanagement-Netzelement, wobei die ersten Ereignisabonnementinformationen die dritten privaten Netzinformationen und eine Auslösebedingung zum Aktualisieren von Abonnementinformationen der Endgerätevorrichtung umfassen.

4. Verfahren nach Anspruch 2, wobei das Verfahren vor dem Bestimmen, durch das Zugriffs- und Mobilitätsmanagement-Netzelement, dass die Endgerätevorrichtung eine Konfigurationsaktualisierungsbedingung erfüllt, ferner Folgendes umfasst:
Empfangen, durch das Zugriffs- und Mobilitätsmanagement-Netzelement, von zweiten Ereignisabonnementinformationen von einem Richtliniensteuerungs-Netzelement, wobei die zweiten Ereignisabonnementinformationen eine Auslösebedingung zum Aktualisieren von Richtlinieninformationen der Endgerätevorrichtung umfassen.

5. Verfahren nach Anspruch 1, wobei das Verfahren vor dem Bestimmen, durch ein Zugriffs- und Mobilitätsmanagement-Netzelement, eines Betriebsmodus einer Endgerätevorrichtung basierend auf dritten privaten Netzinformationen der Endgerätevorrichtung ferner Folgendes umfasst:
Empfangen (S305), durch das Zugriffs- und Mobilitätsmanagement-Netzelement, einer Konfigurationsaktualisierungsanforderung von der Endgerätevorrichtung, wobei die Konfigurationsaktualisierungsanforderung eine Kennung eines privaten Netzes umfasst; und
Abfragen, durch das Zugriffs- und Mobilitätsmanagement-Netzelement, bei dem einheitlichen Datenmanagement-Netzelement nach den Abonnementinformationen der Endgerätevorrichtung basierend auf der Kennung des privaten Netzes und Bestimmen, dass die Endgerätevorrichtung auf das private Netz zugreifen kann.

6. Verfahren nach Anspruch 4, wobei das Verfahren ferner Folgendes umfasst:
Senden (S306), durch das Zugriffs- und Mobilitätsmanagement-Netzelement, des Betriebsmodus der Endgerätevorrichtung an das Richtliniensteuerungs-Netzelement.

7. Informationskonfigurationsverfahren, umfassend:
Erlangen (S306), durch eine Endgerätevorrichtung, von aktualisierten Netzkonfigurationsinformationen von einem Zugriffs- und Mobilitätsmanagement-Netzelement eines öffentlichen Netzes, wobei das öffentliche Netz im Voraus Konfigurationsinformationen von einem privaten Netzserver eines privaten Netzes empfangen hat, der private Netzserver für ein Konfigurationsaktualisierungsereignis abonniert ist oder die Endgerätevorrichtung die privaten Netzkonfigurationsinformationen aktiv angefordert hat, wobei es sich bei dem privaten Netz um ein eigenständiges nicht-öffentliches Netz, NPN, oder ein Netz einer geschlossenen Zugriffsgruppe, CAG, handelt; und
Zugreifen (S310), durch die Endgerätevorrichtung, auf das private Netz basierend auf den aktualisierten Netzkonfigurationsinformationen und Weiterleiten eines Anwendungsdatenverkehrs basierend auf den aktualisierten Netzkonfigurationsinformationen.

8. Verfahren nach Anspruch 7, wobei das Erlangen (S306), durch eine Endgerätevorrichtung, von aktualisierten Netzkonfigurationsinformationen Folgendes umfasst:
Empfangen, durch die Endgerätevorrichtung, von dritten aktualisierten Netzkonfigurationsinformationen von einem Zugriffs- und Mobilitätsmanagement-Netzelement, wobei die dritten aktualisierten Netzkonfigurationsinformationen einen Betriebsmodus der Endgerätevorrichtung und Abonnementinformationen der Endgerätevorrichtung umfassen.

9. Verfahren nach Anspruch 8, wobei das Erlangen, durch eine Endgerätevorrichtung, von aktualisierten Netzkonfigurationsinformationen ferner Folgendes umfasst:
Empfangen, durch die Endgerätevorrichtung, von vierten aktualisierten Netzkonfigurationsinformationen von einem Richtliniensteuerungs-Netzelement, wobei die vierten aktualisierten Netzkonfigurationsinformationen vierte Richtlinieninformationen umfassen und sich die vierten Richtlinieninformationen auf den Betriebsmodus der Endgerätevorrichtung beziehen.

10. Verfahren nach Anspruch 7, wobei das Verfahren vor dem Erlangen, durch eine Endgerätevorrichtung, von aktualisierten Netzkonfigurationsinformationen ferner Folgendes umfasst:
Senden, durch die Endgerätevorrichtung, einer Konfigurationsaktualisierungsanforderung an das Zugriffs- und Mobilitätsmanagement-Netzelement, wobei die Konfigurationsaktualisierungsanforderung eine Kennung des privaten Netzes umfasst.

11. Zugriffs- und Mobilitätsmanagement-Netzelement eines öffentlichen Netzes, umfassend:
Mittel zum Durchführen der Schritte des Verfahrens nach einem der Ansprüche 1-6.

12. Endgerätevorrichtung, umfassend:
einen Prozessor; und
ein computerlesbares Speichermedium, auf dem eine Programmierung zur Ausführung durch den Prozessor gespeichert ist, wobei die Programmierung Anweisungen zu Folgendem beinhaltet:
Erlangen von aktualisierten Netzkonfigurationsinformationen von einem Zugriffs- und Mobilitätsmanagement-Netzelement eines öffentlichen Netzes, wobei das öffentliche Netz im Voraus Konfigurationsinformationen von einem privaten Netzserver eines privaten Netzes empfangen hat, der private Netzserver für ein Konfigurationsaktualisierungsereignis abonniert ist oder die Endgerätevorrichtung die privaten Netzkonfigurationsinformationen aktiv angefordert hat, wobei es sich bei dem privaten Netz um ein eigenständiges nicht-öffentliches Netz, NPN, oder ein Netz einer geschlossenen Zugriffsgruppe, CAG, handelt; und
Zugreifen auf das private Netz basierend auf den aktualisierten Netzkonfigurationsinformationen und Weiterleiten eines Anwendungsdatenverkehrs basierend auf den aktualisierten Netzkonfigurationsinformationen.

13. Endgerätevorrichtung nach Anspruch 12, wobei die Programmierung Anweisungen zu Folgendem beinhaltet:
Empfangen von dritten aktualisierten Netzkonfigurationsinformationen von einem Zugriffs- und Mobilitätsmanagement-Netzelement, wobei die dritten aktualisierten Netzkonfigurationsinformationen einen Betriebsmodus der Endgerätevorrichtung und Abonnementinformationen der Endgerätevorrichtung umfassen.

14. Endgerätevorrichtung nach Anspruch 13, wobei die Programmierung ferner Anweisungen zu Folgendem beinhaltet:
Empfangen von vierten aktualisierten Netzkonfigurationsinformationen von einem Richtliniensteuerungs-Netzelement, wobei die vierten aktualisierten Netzkonfigurationsinformationen vierte Richtlinieninformationen umfassen und sich die vierten Richtlinieninformationen auf den Betriebsmodus der Endgerätevorrichtung beziehen.

15. Endgerätevorrichtung nach Anspruch 13, wobei die Programmierung ferner Anweisungen zu Folgendem beinhaltet:
Senden einer Konfigurationsaktualisierungsanforderung an das Zugriffs- und Mobilitätsmanagement-Netzelement, wobei die Konfigurationsaktualisierungsanforderung eine Kennung des privaten Netzes umfasst.

## Revendications

1. Procédé de configuration d'informations, comprenant :
la détermination (S303), par un élément de réseau de gestion d'accès et de mobilité d'un réseau public, d'un mode de fonctionnement d'un terminal sur la base de troisièmes informations de réseau privé du terminal, dans lequel le réseau public a reçu à l'avance des informations de configuration d'un serveur de réseau privé d'un réseau privé, le serveur de réseau privé étant abonné à un événement de mise à jour de configuration, ou un terminal a activement demandé les informations de configuration du réseau privé, le réseau privé étant un réseau non public autonome, NPN, ou un réseau de groupe d'accès fermé, CAG ;
l'envoi (S304), par l'élément de réseau de gestion d'accès et de mobilité, du mode de fonctionnement à un élément de réseau de gestion de données unifiée d'un réseau public ;
la réception (S305), par l'élément de réseau de gestion d'accès et de mobilité, de troisièmes informations de configuration de réseau mises à jour en provenance de l'élément de réseau de gestion de données unifiée, dans lequel les troisièmes informations de configuration de réseau mises à jour comprennent le mode de fonctionnement et les informations d'abonnement ; et
l'envoi (S306), par l'élément de réseau de gestion d'accès et de mobilité, des troisièmes informations de configuration de réseau mises à jour au terminal.

2. Procédé selon la revendication 1, dans lequel, avant la détermination (S303), par un élément de réseau de gestion d'accès et de mobilité, d'un mode de fonctionnement d'un terminal sur la base de troisièmes informations de réseau privé du terminal, le procédé comprend également :
la détermination, par l'élément de réseau de gestion d'accès et de mobilité, que le terminal remplit une condition de mise à jour de configuration, dans lequel la condition de mise à jour de configuration comprend une condition de déclenchement pour déclencher des informations de zone et/ou des informations de période de temps par le terminal.

3. Procédé selon la revendication 2, dans lequel avant la détermination, par l'élément de réseau de gestion d'accès et de mobilité, que le terminal remplit une condition de mise à jour de configuration, le procédé comprend également :
la réception, par l'élément de réseau de gestion d'accès et de mobilité, de premières informations d'abonnement à un événement provenant de l'élément de réseau de gestion de données unifiée, dans lequel les premières informations d'abonnement à un événement comprennent les troisièmes informations de réseau privé et une condition de déclenchement pour la mise à jour des informations d'abonnement du terminal.

4. Procédé selon la revendication 2, dans lequel avant la détermination, par l'élément de réseau de gestion d'accès et de mobilité, que le terminal remplit une condition de mise à jour de configuration, le procédé comprend également :
la réception, par l'élément de réseau de gestion d'accès et de mobilité, de deuxièmes informations d'abonnement à un événement provenant d'un élément de réseau de contrôle de politique, dans lequel les deuxièmes informations d'abonnement à un événement comprennent une condition de déclenchement pour la mise à jour des informations de politique du terminal.

5. Procédé selon la revendication 1, dans lequel, avant la détermination, par un élément de réseau de gestion d'accès et de mobilité, d'un mode de fonctionnement d'un terminal sur la base de troisièmes informations de réseau privé du terminal, le procédé comprend également :
la réception (S305), par l'élément de réseau de gestion d'accès et de mobilité, d'une demande de mise à jour de configuration provenant du terminal, dans lequel la demande de mise à jour de configuration comprend un identifiant du réseau privé ; et
l'interrogation, par l'élément de réseau de gestion d'accès et de mobilité, de l'élément de réseau de gestion de données unifiée pour les informations d'abonnement du terminal sur la base de l'identifiant du réseau privé, et la détermination que le terminal peut accéder au réseau privé.

6. Procédé selon la revendication 4, dans lequel le procédé comprend également :
l'envoi (S306), par l'élément de réseau de gestion d'accès et de mobilité, du mode de fonctionnement du terminal à l'élément de réseau de contrôle de politique.

7. Procédé de configuration d'informations, comprenant :
l'obtention (S306), par un terminal, d'informations de configuration de réseau mises à jour provenant d'un élément de réseau de gestion d'accès et de mobilité d'un réseau public, dans lequel le réseau public a reçu à l'avance des informations de configuration d'un serveur de réseau privé d'un réseau privé, le serveur de réseau privé étant abonné à un événement de mise à jour de configuration, ou le terminal a activement demandé les informations de configuration du réseau privé, le réseau privé étant un réseau non public autonome, NPN, ou un réseau de groupe d'accès fermé, CAG ; et
l'accès (S310), par le terminal, au réseau privé sur la base des informations de configuration de réseau mises à jour, et le routage du trafic applicatif sur la base des informations de configuration de réseau mises à jour.

8. Procédé selon la revendication 7, dans lequel l'obtention (S306), par un terminal, d'informations de configuration de réseau mises à jour, comprend :
la réception, par le terminal, de troisièmes informations de configuration de réseau mises à jour provenant d'un élément de réseau de gestion d'accès et de mobilité, dans lequel les troisièmes informations de configuration de réseau mises à jour comprennent un mode de fonctionnement du terminal et des informations d'abonnement du terminal.

9. Procédé selon la revendication 8, dans lequel l'obtention, par un terminal, d'informations de configuration de réseau mises à jour comprend également :
la réception, par le terminal, de quatrièmes informations de configuration de réseau mises à jour provenant d'un élément de réseau de contrôle de politique, dans lequel les quatrièmes informations de configuration de réseau mises à jour comprennent des quatrièmes informations de politique, et les quatrièmes informations de politique sont liées au mode de fonctionnement du terminal.

10. Procédé selon la revendication 7, dans lequel avant l'obtention, par un terminal, d'informations de configuration de réseau mises à jour, le procédé comprend également :
l'envoi, par le terminal, d'une demande de mise à jour de configuration à l'élément de réseau de gestion d'accès et de mobilité, dans lequel la demande de mise à jour de configuration comprend un identifiant du réseau privé.

11. Élément de réseau de gestion d'accès et de mobilité d'un réseau public, comprenant :
un moyen pour mettre en œuvre les étapes du procédé selon l'une quelconque des revendications 1 à 6.

12. Terminal, comprenant :
un processeur ; et
un support de stockage lisible par ordinateur stockant une programmation à exécuter par le processeur, la programmation comportant des instructions pour :
obtenir des informations de configuration de réseau mises à jour provenant d'un élément de réseau de gestion d'accès et de mobilité d'un réseau public, dans lequel le réseau public a reçu à l'avance des informations de configuration d'un serveur de réseau privé d'un réseau privé, le serveur de réseau privé étant abonné à un événement de mise à jour de configuration, ou le terminal a activement demandé les informations de configuration du réseau privé, le réseau privé étant un réseau non public autonome, NPN, ou un réseau de groupe d'accès fermé, CAG ; et
accéder au réseau privé sur la base des informations de configuration de réseau mises à jour, et le routage du trafic applicatif sur la base des informations de configuration de réseau mises à jour.

13. Terminal selon la revendication 12, dans lequel la programmation comporte des instructions pour :
recevoir des troisièmes informations de configuration de réseau mises à jour provenant d'un élément de réseau de gestion d'accès et de mobilité, dans lequel les troisièmes informations de configuration de réseau mises à jour comprennent un mode de fonctionnement du terminal et des informations d'abonnement du terminal.

14. Terminal selon la revendication 13, dans lequel la programmation comporte également des instructions pour :
recevoir des quatrièmes informations de configuration de réseau mises à jour provenant d'un élément de réseau de contrôle de politique, dans lequel les quatrièmes informations de configuration de réseau mises à jour comprennent des quatrièmes informations de politique, et les quatrièmes informations de politique sont liées au mode de fonctionnement du terminal.

15. Terminal selon la revendication 13, dans lequel la programmation comporte également des instructions pour :
envoyer une demande de mise à jour de configuration à l'élément de réseau de gestion d'accès et de mobilité, dans lequel la demande de mise à jour de configuration comprend un identifiant du réseau privé.
